(19) Europäisches Patentamt
European Patent Office
Office européen des brevets

(11) **EP 4 359 764 B1**

(12) **EUROPÄISCHE PATENTSCHRIFT**

(45) Veröffentlichungstag und Bekanntmachung des Hinweises auf die Patenterteilung:
**29.07.2026 Patentblatt 2026/31**

(21) Anmeldenummer: **22737839.5**

(22) Anmeldetag: **23.06.2022**

(51) Internationale Patentklassifikation (IPC):
*G01N 21/31* (2006.01)    *G01N 21/51* (2006.01)
*G01N 21/80* (2006.01)    *G01N 21/47* (2006.01)
*G01N 21/53* (2006.01)    *G01N 21/77* (2006.01)
*G01N 21/64* (2006.01)

(52) Gemeinsame Patentklassifikation (CPC):
**G01N 21/31;** G01N 21/51; G01N 21/534;
G01N 21/80; G01N 2021/4769; G01N 2021/6434;
G01N 2021/7786; G01N 2201/065;
G01N 2201/1296

(86) Internationale Anmeldenummer:
**PCT/EP2022/067265**

(87) Internationale Veröffentlichungsnummer:
**WO 2022/268997 (29.12.2022 Gazette 2022/52)**

(54) **SPEKTROSKOPIE-VORRICHTUNG UND VERFAHREN ZUR BESTIMMUNG VON BLUTPARAMETERN IN NICHT-HÄMOLYSIERTEN BLUTPROBEN**

SPECTROSCOPY DEVICE AND METHOD FOR DETERMINING BLOOD PARAMETERS IN NON-HEMOLYZED BLOOD SAMPLES

DISPOSITIF DE SPECTROSCOPIE ET MÉTHODE DE DÉTERMINATION DE PARAMÈTRES SANGUINS DANS DES ÉCHANTILLONS DE SANG NON HÉMOLYSÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2021 DE 102021116189**

(43) Veröffentlichungstag der Anmeldung:
**01.05.2024 Patentblatt 2024/18**

(73) Patentinhaber:
• **Müller, Stefan**
  **23554 Lübeck (DE)**
• **Kern, Benjamin**
  **23558 Lübeck (DE)**

(72) Erfinder:
• **Müller, Stefan**
  **23554 Lübeck (DE)**
• **Kern, Benjamin**
  **23558 Lübeck (DE)**

(74) Vertreter: **Heinemeyer, Karsten et al**
**AdvInno Patent-u. Rechtsanwaltspart. mbB**
**Heinemeyer & Joachim**
**Sandstrasse 17-23**
**23552 Lübeck (DE)**

(56) Entgegenhaltungen:
**DE-B3- 102020 104 266**

• **CHATZIDAKIS M AND BOTTON G A: "Towards calibration-invariant spectroscopy using deep learning", SCIENTIFIC REPORTS, vol. 9, no. 1, 14 February 2019 (2019-02-14), XP055959929, Retrieved from the Internet <URL:http://www.nature.com/articles/s41598-019-38482-1> [retrieved on 20220913], DOI: 10.1038/s41598-019-38482-1**

• DING X ET AL: "Measuring Oxygen Saturation With Smartphone Cameras Using Convolutional Neural Networks", IEEE JOURNAL OF BIOMEDICAL AND HEALTH INFORMATICS, IEEE, PISCATAWAY, NJ, USA, vol. 23, no. 6, November 2019 (2019-11-01), pages 2603 - 2610, XP011754103, ISSN: 2168-2194, [retrieved on 20191107], DOI: 10.1109/JBHI.2018.2887209

• LIU J ET AL: "Deep Convolutional Neural Networks for Raman Spectrum Recognition: A Unified Solution", ARXIV.ORG, CORNELL UNIVERSITY LIBRARY, 201 OLIN LIBRARY CORNELL UNIVERSITY ITHACA, NY 14853, 18 August 2017 (2017-08-18), XP080955100, DOI: 10.1039/C7AN01371J

**Beschreibung**

Die Erfindung betrifft eine Spektroskopie-Vorrichtung und ein Verfahren zur Bestimmung von Blutparametern in nicht hämolysierten Blutproben.

Hämoglobin ist ein äußerst wichtiger Stoff im menschlichen Körper, welcher in den roten Blutkörperchen in hoher Konzentration enthalten und für den Sauerstofftransport von den Lungen zu den Zellen und Organen verantwortlich ist. Die genaue Kenntnis der Konzentration an Gesamthämoglobin (ctHb) ist im klinischen Umfeld sehr wichtig, da eine starke Abnahme zu einer Sauerstoffunterversorgung (Anämie) mit ausgeprägter Symptomatik von Atemnot über Orientierungslosigkeit bis hin zum Tod führen kann. Auch erhöhte Werte können bei verschiedenen Erkrankungen auftreten. Aber nicht nur die absolute Menge an Hämoglobin ist von Bedeutung, sondern auch seine Funktionsfähigkeit. Bei einem gesunden Menschen sind im arteriellen Blut etwa 98 % des Hämoglobins mit Sauerstoff beladen, man bezeichnet es in diesem Zustand als Oxyhämoglobin ($O_2$Hb). Ohne gebundenen Sauerstoff wird es als reduziertes Hämoglobin oder Desoxyhämoglobin (HHb) bezeichnet. Pathologisch veränderte, dysfunktionale Formen des Hämoglobins nehmen nicht am Sauerstofftransport teil und können dadurch innerhalb kürzester Zeit zu einer lebensbedrohlichen Situation führen. Sie werden als Carboxyhämoglobin (COHb), Methämoglobin (MetHb) und Sulfhämoglobin (SHb) bezeichnet. Ursache hierfür können eine Intoxikation mit Kohlenmonoxid (CO), aber auch Vergiftungen durch Chemikalien (Nitrate, Nitrite, Stickoxide, Wasserstoffperoxid, Schwefelverbindungen), Medikamente (Sulfonamide, Nitroglycerin, Stickstoffmonoxid und Lokalanästhetika wie Benzocaine und Prilocaine) sowie erbliche, genetische Faktoren sein.

Die Bestimmung der ctHb sowie der fraktionellen Anteile von $O_2$Hb, HHb, COHb, MetHb und SHb erfolgt üblicherweise spektroskopisch mit sogenannten CO-Oximetern. In Vollblut befindet sich das Hämoglobin konzentriert in den roten Blutkörperchen. Das umgebende Blutplasma hat einen geringeren Brechungsindex, wodurch es zu ausgeprägten Streueffekten an der Grenzschicht kommt. Aus diesem Grund werden die roten Blutkörperchen in der Regel zunächst durch Ultraschall oder zugesetzte Reagenzien zerstört, so dass sich das darin enthaltene Hämoglobin gleichmäßig in der Probe verteilt. Dies vereinfacht die optische Analyse erheblich und ermöglicht es, die ctHb sowie die fraktionellen Anteile der Hämoglobinderivate anhand der Absorption bei verschiedenen Wellenlängen nach dem Gesetz von Bouguer-Lambert-Beer zu bestimmen. Dieses beschreibt den Zusammenhang zwischen der Konzentration c einer Substanz und der spektroskopisch messbaren Abschwächung der transmittierten Intensität $I$ gegenüber der eingestrahlten Intensität $I_0$:

$$I = I_0 \cdot e^{-\varepsilon(\lambda) \cdot c \cdot d}$$

Dabei ist $\varepsilon(\lambda)$ ein von der Substanz und der Wellenlänge $\lambda$ abhängiger Koeffizient, welcher die optische Abschwächung definiert, sowie d die optische Pfadlänge durch das Medium.

Die Notwendigkeit der Hämolyse wird jedoch als nachteilig gesehen, da es gegenüber der direkten Messung in Vollblut zu Zeitverlusten kommt und die Blutprobe irreversibel verändert wird, wodurch diese für weitere Messungen nicht mehr zur Verfügung steht. Erfolgt die Hämolyse nicht vollständig, so können weiterhin Streueffekte auftreten, die zu einem Fehler in der Bestimmung der Blutparameter führen. Ebenfalls nachteilig ist, dass zusätzliche Verbrauchsmittel (z.B. Reagenzien) oder weitere Komponenten (z.B. Ultraschallerzeuger) für die Hämolyse benötigt werden, womit ein höherer Platz- und Wartungsaufwand sowie zusätzliche Kosten verbunden sind.

Ein Verfahren, um Hämoglobinderivate ohne vorherige Hämolyse optisch bestimmen zu können, ist in US 6.262.798 B1 beschrieben. Dabei wird eine empirisch ermittelte Korrekturmatrix verwendet, um die bei sieben Wellenlängen gemessene Extinktion einer Vollblutprobe zu korrigieren und die Konzentrationen anschließend mittels Lambert-Beer bestimmen zu können.

In der US 10.338.058 B2 wird die angestrebte Wellenlängengenauigkeit von $\pm 0{,}03$ nm eines Spektrometers zur Analyse von Vollblutproben durch Einbau einer Kalibrierlampe und aufwendiger Temperaturstabilisierung gelöst. Ein solches Messverfahren ist wenig robust und nicht für den mobilen Einsatz unter schwankenden Umgebungsbedingungen geeignet, wie diese beispielsweise beim Einsatz außerhalb einer kontrollierten Umgebung (wie Klinik oder Labor) zu erwarten sind.

In den Schriften US 10.088.360 B2, US 10.088.468 B2, US 10.151.630 B2, US 2017/0227397 A1, US 2019/0017993 A1 und US 2019/0033287 A1 werden diverse Aspekte, wie die Kompensation der thermischen Ausdehnung der achromatischen Linsen und weitere Ausgestaltungen eines optischen Spektrometers zur Vollblutanalyse unter Schutz gestellt. Es wird für die Bestimmung der Hämoglobinderivate aus Vollblut nach dem Prinzip der diffusen Transmission das chemometrische Verfahren kernel orthogonal projection to latent structures (k-OPLS) angewendet.

In [REDMER, B. et al.: Determination of hemoglobin derivatives in unaltered whole blood samples using Support Vector regression in the spectral range from 450 to 700nm. Proceedings of SPIE, Vol. 11247, 14.02.2020. DOI: 10.1117/12.2544806] und in der DE 10 2020 104 266 wird die Anwendung von support vector machines (SVM) zur Bestimmung von Blutparametern, wie ctHb, Hämoglobinderivaten und Hämatokrit, bei der spektroskopischen Untersuchung von Vollblutproben vorgeschlagen.

Gängige chemometrische Verfahren, wie k-OPLS oder support vector regression (SVR), sind unvorteilhafterweise sehr anfällig für Instrumentendrift. Dieser kann einen erheblichen Einfluss auf die Genauigkeit und Zuverlässigkeit des Messverfahrens haben und wird z.B. durch fehlerbehaftete Kalibration und Fertigungstoleranzen, Instabilitäten in Folge statistischer Vorgänge wie Rauschen, sowie durch Umwelteinflüsse wie Temperaturschwankungen, mechanische Erschütterungen und Veränderungen der Lage hervorgerufen.

[Damon T. DePaoli, Prudencio Tossou, Martin Parent, Dominic Sauvageau & Daniel C. Côté, "Convolutional Neural Networks for Spectroscopic Analysis in Retinal Oximetry", Scientific Reports volume 9, 11387 (2019), doi: 10.1038/s41598-019-47621-7] beschreibt den Einsatz von convolutional neural networks (CNNs) bei der spektroskopischen Bestimmung der Sauerstoffsättigung in der Retina zur Korrektur des statistischen Rauschens und spektraler Verschiebung aufgrund einer unzureichenden Kalibration des Messgeräts.

In [Ding X et al: "Measuring Oxygen Saturation with Smartphone Cameras using Convolutional Neural Networks", IEEE Journal of Biomedical an Health Informatics, IEEE, Piscataway, NJ, USA, Bd. 23, Nr. 6, November 2019 (2019-11), Seiten 2603 - 2610, XP011754103, ISSN: 2168-2194, DOI: 10.1109/JBHI.2018.2887209] wird ein Verfahren zum Auswerten von Messdaten beschrieben, die mit einem optischen Aufbau aufgrund einer Bildaufnahme an einer nicht hämolysierten Blutprobe erzeugt werden. In diesem Fall werden die Messdaten mittels einem als Convolutional Neural Network (CNN) ausgeführten prädiktiven Modell ausgewertet, wobei das Modell unter Einsatz von Trainingsdaten, die zumindest teilweise augmentierte Daten enthalten, trainiert wurde.

In [Liu J et al.: "Deep Convolutional Neural Networks for Raman Spectrum Recognition: A Unified Solution", ARXIV.ORG, Cornel University Library, 201 Olin Library Cornell University Ithaca, NY 14853, 18. August 2017 (2017-08-18), XP080955100, DOI: 10.1039/C7AN01371J] wird schließlich ein Convolutional Neural Network (CNN) beschrieben, das mit augmentierten Daten trainiert wurde und auf optische Raman-Messungen der RRUFF-Datenbank angewendet wird.

In [M. Chatzidakis, G.A. Botton, "Towards calibration-invariant spectroscopy using deep learning", Scientific Reports volume 9, 2126 (2019), doi: 10.1038/s41598-019-38482-1] wird die Korrektur konstruktionsbedingter (bei Anwendung verschiedener Messgeräte des gleichen Typs) oder statistischer Abweichungen, in Bezug auf die Wellenlänge bei der Elektronenenergieverlustspektroskopie EELS beschrieben, hierbei kommen CNNs zur Anwendung.

Die in diesen Fällen durchgeführten Korrekturen berücksichtigen nicht die Abweichungen des Messgerätes, welche durch nicht kalkulierbare Umwelteinflüsse wie Temperaturschwankungen oder durch Veränderungen der Lage des Messgeräts hervorgerufen werden, sondern nur solche Abweichungen, die kausal absehbar, wiederkehrend und damit kalkulierbar sind.

Insbesondere die durch nicht kalkulierbare Umwelteinflüsse wie Temperaturschwankungen oder Lageveränderungen des Messgeräts hervorgerufenen Abweichungen spielen aber bei Messungen mit mobil betriebenen Messgeräten (In-situ-Messungen) eine entscheidend wichtige Rolle.

Daher ist es Aufgabe der Erfindung, eine Vorrichtung und ein Verfahren zu Verfügung zu stellen, welches die spektroskopische Bestimmung von Blutparametern in nicht-hämolysierten Vollblutproben ermöglicht.

Insbesondere ist es Aufgabe der Erfindung, eine Vorrichtung und ein Verfahren zu Verfügung zu stellen, welches die spektroskopische Bestimmung von Blutparametern in nicht-hämolysierten Vollblutproben in-situ mit mobil betriebenen Messgeräten ermöglicht.

Die Aufgabe der Erfindung wird durch eine Vorrichtung und ein Verfahren gemäß den Hauptansprüchen gelöst.

Insbesondere wird die der Erfindung zugrunde liegende Aufgabe mit einer Spektroskopie-Vorrichtung zur Bestimmung von Blutparametern in nicht-hämolysierten Blutproben gelöst, die über wenigstens eine Lichtquelle zur Emission von Strahlung im Wellenlängenbereich zwischen 300 nm und 1000 nm, über eine während einer Messung die Blutprobe aufnehmenden Messküvette, die wenigstens in einem Messbereich, durch den die Strahlung wenigstens zeitweise während der Messung hindurchtritt, optisch transparent ist, über einen Integrator, der eingerichtet ist, das von der durchstrahlten Blutprobe vorwärts gestreute Licht zu empfangen, über ein Spektrometer, dem die vom Integrator empfangene Strahlung zugeleitet wird, und über eine Datenübertragungseinheit, die einen Mikrocontroller aufweist, verfügt, wobei und das Spektrometer eingerichtet ist, ein Messsignal auf der Grundlage wenigstens einer Eigenschaft der Strahlung zu erzeugen und wenigstens zeitweise über eine Schnittstelle an die Datenverarbeitungseinheit, zu übertragen und wobei die Datenverarbeitungseinheit und/oder der Mikrocontroller eingerichtet ist, um auf der Grundlage des Messignals Messdaten zu erzeugen und die Messdaten mit einem prädiktiven Modell, das auf wenigstens einem zumindest teilweise mittels Trainingsdaten, die wenigstens teilweise augmentierte Daten enthalten, trainierten Convolutional Neural Network (CNN), basiert, auszuwerten und ein Ergebnis der Auswertung über eine Schnittstelle an eine Ausgabe zu übertragen. Erfindungsgemäß erfolgt die Auswertung der Messdaten daher mit einem speziell ausgebildeten, wenigstens ein Convolutional Neural Network (CNN) aufweisenden prädiktiven Modell, da dieses mit Trainingsdaten trainiert wurde, die über spezielle Eigenschaften verfügen, insbesondere einen Umfang aufweisen, wie dies für das Training von prädiktiven Modellen im Bereich spektroskopischer Anwendungen in der Medizintechnik bislang unbekannt war. Die Datenverarbeitungseinheit ist daher derart ausgeführt, dass eine Auswertung der mit dem optischen Aufbau, durch den eine Transmissionsmessung an einer nicht-hämolysierten Blutprobe durchführbar ist, erzeugbaren Messdaten nicht nur zu genauen Ergebnissen führt, sondern sich die Messdatenauswertung auch durch eine besondere Robustheit auszeichnet. Im Zusammenhang mit der Beschreibung der Erfindung sowie spezieller Ausführungsbeispiele dazu ist unter Robustheit die Unempfindlichkeit des Systems zum Beispiel gegenüber Temperaturschwankungen, Erschütterungen, Bauteil- und Fertigungstoleranzen, Kalibrierfehlern und ähnlichem zu verstehen. Diese Eigenschaft ermöglicht erst Anwendungsszenarien, in denen derartige Störeinflüsse vorherrschend sind, beispielsweise in der Präklinik im Rettungsdienst oder in vielen Schwellen- und Entwicklungsländern, in denen bekannte Analyseverfahren und -geräte nicht eingesetzt werden können.

Bei optischen Aufbauten stellt im Laufe des Betriebs üblicherweise die instrumentenbedingte Drift der Messwerte, auch Instrumentendrift genannt, ein nicht unerhebliches, bislang vielfach nicht zufriedenstellend gelöstes Problem dar. Mithilfe der erfindungsgemäßen technischen Lösung wird eine besonders robuste Messung und Messdatenauswertung realisiert, da die instrumentenbedingte Messwertdrift bzw. die dieser zugrundeliegenden Ursachen berücksichtigt werden. Dies wird erreicht, indem das in der Datenverarbeitungseinheit verarbeitete prädiktive Modell, insbesondere das wenigstens eine verwendete Convolutional Neural Network (CNN), gerätespezifische Eigenschaften und Alterungserscheinungen berücksichtigt. Dies wird durch Einsatz speziell gewonnener Trainingsdaten beim Training des prädiktiven Modells, insbesondere des wenigstens einen Convolutional Neural Network (CNN) erreicht, die nicht zwingend ausschließlich auf Messungen beruhen müssen, sondern erfindungsgemäß zumindest zum Teil augmentierte Daten enthalten. Denkbar ist generell auch, dass alternativ synthetische Daten als Trainingsdaten verwendet werden, wobei der Unterschied zwischen augmentierten und synthetischen Daten im Wesentlichen darin besteht, dass eine Augmentierung von Daten bestehende Daten, insbesondere experimentell gewonnene Daten voraussetzt, während synthetische Daten ohne solche erzeugt werden.

Von Bedeutung ist somit, dass die zum Training des wenigstens einen als prädiktives Modell eingesetzten Convolutional Neural Network (CNN) verwendeten Daten auch die zu erwartenden Störeinflüsse, die zu instrumentbedingten Driften der Messignale führen können, abbilden. Durch Umsetzung der Erfindung ist es somit nicht zwingend erforderlich, wie sonst üblich, viele experimentelle Daten aufnehmen, da augmentierte und/oder synthetische Daten, die die zu erwartenden Störeinflüsse abbilden, erzeugt und zum Training des oder der Convolutional Neural Network (CNN) verwendet werden. Vorzugsweise werden diese augmentierten Daten zumindest teilweise aus experimentell gewonnen Daten hergeleitet. Alternativ oder ergänzend werden die augmentierten Daten mithilfe von Rechen- und/oder Simulationsmodellen unter Berücksichtigung wenigstens einer Eigenschaft der für die Messung und Erzeugung von Messwerten verwendeten technischen Bauteile gewonnen.

Gemäß einer besonderen Ausführungsform zeichnet sich das wenigstens eine in der Datenauswerteeinheit und/oder im Mikrocontroller umgesetzte Convolutional Neural Network (CNN) dadurch aus, dass es mit Trainingsdaten trainiert wurde, die unter Berücksichtigung wenigstens eines Störeinflusses, bevorzugt wenigstens zweier wesentlicher Störeinflüsse, wie sie insbesondere bei mobilen Messvorrichtungen auftreten, augmentiert wurden. Besonders bevorzugt werden als Störeinflüsse eine Drift der detektierten Intensität der vom Integrator und/oder dem Spektrometer empfangenen Strahlung und/oder eine Verschiebung des Frequenzspektrums dieser Strahlung berücksichtigt.

Eine Drift der detektierten Intensität der empfangenen Strahlung kann durch eine ungenaue Regelung der Lichtquelle, Abnutzung der Lichtquelle, Verschmutzungen, Bauteil- und Fertigungstoleranzen oder Temperatureinflüsse, auch beim Detektor, verursacht werden. Gemäß einer besonderen Ausführungsform wird durch eine Multiplikation der erzeugten Messwerte mit einem Faktor, der einen Wert von 0,9 bis 1,1 annimmt, eine Drift um +/- 10 % nachgebildet, die so in den Trainingsdaten und damit beim Training des wenigstens einen Convolutional Neural Network (CNN) berücksichtigt wird.

Im Weiteren kann eine Verschiebung des Frequenzspektrums der empfangenen Strahlung durch mechanische Einflüsse auf die optische Bank eines Spektrometers sowie durch Temperaturschwankungen oder ungenaue Kalibrierung und Bauteilsowie Fertigungstoleranzen verursacht werden. Die instrumentenbedingte Drift der Messwerte bzw. die Instrumentendrift typischer Gitterspektrometer zum Beispiel liegt bei etwa 0,05 nm/K. Gemäß einer weiteren besonderen Weiterbildung der Erfindung wird diese Drift durch Interpolation auf einen um +/- 2 nm verschobenen Wellenlängenvektor nachgebildet und in den Trainingsdaten und damit beim Training des wenigstens einen Convolutional Neural Network (CNN) berücksichtigt. Durch diese Interpolation werden Temperaturschwankungen von etwa +/- 40 K berücksichtigt.

Auf vorteilhafte Weise werden die für das Training des wenigstens einen in der Datenverarbeitungseinheit und/oder dem Mikrocontroller umgesetzten Convolutional Neural Network (CNN) verwendeten Trainingsdaten dadurch erzeugt, dass nicht nur klinisch relevante Blutparameter im Labor experimentell variiert und dabei eine große Datenbank an optischen Spektren und Referenzwerten für eine Modellierung, also für das prädiktive Modell, genutzt wird, sondern ausschließlich oder zumindest teilweise augmentierte Daten verwendet werden. Auf vergleichsweise einfache Weise wird so, die für das Training zur Verfügung stehende Menge an Trainingsdaten erhöht und hierdurch auf besondere Weise und effektiv eine Steigerung der Robustheit der Messdatenauswertung erreicht. Hierbei ist zu berücksichtigen, dass die Erhebung experimenteller Daten im biomedizinischen Umfeld regelmäßig mit einem großen Aufwand verbunden ist, sodass mit der Erfindung eine effiziente Möglichkeit bereitgestellt wird, eine große Menge von Trainingsdaten zum Training eines in der Datenverarbeitungseinheit und/oder dem Mikrocontroller einer Vorrichtung zur Bestimmung von Blutparametern in nicht-hämolysierten Blutproben umgesetzten Convolutional Neural Network (CNN) zu verwenden. Die erfindungsgemäß eingesetzte Datenverarbeitungseinheit und/oder der Mikrocontroller ist somit durch die Implementierung des erfindungsgemäßen prädiktiven Modells auf spezielle Weise ausgebildet.

Gemäß einer besonders geeigneten Weiterbildung der Erfindung werden zumindest teilweise augmentierte Daten zum Training wenigstens eines Convolutional Neural Network (CNN), die ein erhöhtes Rauschen aufweisen. Derart ausgebildete augmentierte Daten bieten Vorteile für das Training und die Stabilität der damit trainierten Convolutional Neural Networks (CNN).

Um die Wirksamkeit der Nutzung augmentierter Daten für die Trainingsdaten zu belegen, wurden zum Vergleich Messdaten untersucht, die den besagten Störeinflüssen unterlagen. Dabei hat sich auf überraschende Weise gezeigt, dass selbst wenn die augmentierten Daten nur eine oder insbesondere zwei der stärksten Abweichungen abbilden, auch die Robustheit der Messdatenauswertung für die dazwischenliegenden Abstufungen an Störungen gewährleistet ist. Dies ist eine durchaus überraschende Erkenntnis. Auf vorteilhafte Weise wurden hierbei zur Bewertung der Genauigkeit und Robustheit, auch für die Zwischenzustände, die Metriken Bestimmheitsmaß ($R^2$), mittlere quadratische Abweichung (RMSE) und mittlere absolute Abweichung (MAE) genutzt.

Gemäß einer weiteren Ausführungsform wäre es grundsätzlich denkbar, augmentierte Daten auch bei der Nutzung anderer Verfahren des maschinellen Lernens, zu verwenden, beispielsweise mit SVR oder k-OPLS, jedoch haben Untersuchungen in Bezug auf die Nutzung von k-OPLS gezeigt, dass dies die Komplexität eines prädiktives Modells deutlich erhöht und eine erneute Optimierung der Hyperparameter des Modells erfordert. Dies ist insofern bemerkenswert, als sich herausgestellt hat, dass es mit traditionellen Verfahren, wie etwa Random Forest, Decision Trees, Elastic Net und Lasso, nicht möglich ist, das optische Verhalten bzw. die optischen Eigenschaften von Vollblut in einem Strahlengang, insbesondere von nicht-hämolysierten Blotproben, ausreichend genau zu modellieren.

Zudem skalieren viele traditionelle Verfahren schlecht mit großen Datenmengen, wie sie durch die erfindungsgemäß vorgesehene Nutzung augmentierter Daten als Trainingsdaten vergleichsweise schnell zustande kommen.

Demgegenüber skalieren die erfindungsgemäß genutzten Convolutional Neural Networks (CNNs) sehr gut und erfordern, wie sich im Rahmen von Untersuchungen gezeigt hat, keine erneute Optimierung der Hyperparameter. Zudem können Convolutional Neural Networks (CNNs) im Gegensatz zu vielen traditionellen Verfahren schnell auf einem Grafikprozessor (GPU) trainiert werden, was für eine praktische Anwendung deutliche Vorteile bietet.

Die Erfinder haben nun festgestellt und experimentell nachgewiesen, dass sich die Blutparameter ctHb, $O_2$Hb, HHb, COHb, MetHb und der Hämatokrit in nicht hämolysierten Vollblutproben unter Berücksichtigung von durch nicht kalkulierbare Umwelteinflüsse wie Temperaturschwankungen oder Lageveränderungen des Messgeräts hervorgerufenen Abweichungen äußerst zuverlässig und mit hoher Genauigkeit bestimmen lassen, wenn die im Folgenden beschriebene erfindungsgemäße spektroskopische Vorrichtung und das folgende erfindungsgemäße Verfahren verwendet wird.

Die erfindungsgemäße Vollblut-Spektroskopie-Vorrichtung umfasst die folgenden Bestandteile:

Mindestens eine Lichtquelle zur Emission von Strahlung im Wellenlängenbereich zwischen 300 nm und 1000 nm, bevorzugt im Wellenlängenbereich 450 nm bis 700 nm
Messküvette
Integrator
Spektrometer, bevorzugt mit dispersivem optischen Element und Detektor Mikrocontroller
Ausgabe
Speicher
Prädiktive Modelle (bevorzugt mit wenigstens teilweise augmentierten Daten trainierte CNNs)

In einer bevorzugten Ausführungsform verfügt die erfindungsgemäße Vorrichtung über eine Linse oder einen Reflektor.

In einer weiteren bevorzugten Ausführungsform verfügt die erfindungsgemäße Vorrichtung über eine Lochblende.

In einer weiteren bevorzugten Ausführungsform verfügt die erfindungsgemäße Vorrichtung über einen Lichtwellenleiter.

Bei der mindestens einen Lichtquelle zur Emission von Strahlung im Wellenlängenbereich zwischen 300 nm und 1000 nm, bevorzugt im Wellenlängenbereich 450 nm bis 700 nm, kann es sich beispielsweise um eine Wolfram-Halogen-Lampe, eine Xenon-Lampe oder eine weiße LED handeln. Es kann auch eine Lichtquelle eingesetzt werden, bei der die Emission mehrerer LEDs durch die Einkopplung in denselben Strahlengang durch Spiegel, Linsen oder spezielle Lichtwellenleiter oder das Aufbringen dieser auf ein gemeinsames Substrat erreicht wird.

Geeignete Linsen oder Reflektoren sind dem Fachmann allgemein bekannt. Aufgabe von beiden ist die Kollimation (d.h. Bündelung) des Lichts, um einen höheren Signalanteil am Detektor zu erhalten.

Die Messküvette kann auch als Durchflusszelle ausgestaltet sein. Sie dient während der Messung als Probengefäß und ist aus einem Material gefertigt, das im Spektralbereich zwischen 300 nm und 1000 nm, bevorzugt 450 nm bis 700 nm optisch transparent ist. Die Messküvette stellt eine Schichtdicke der Probe zwischen 60 μm und 150 μm, bevorzugt zwischen 80 μm und 120 μm, besonders bevorzugt zwischen 90 μm und 110 μm her.

Bei dem Integrator handelt es sich um ein Diffusorplättchen, optische Linsen, Spiegel oder eine Ulbricht-Kugel. Er dient dazu, das durch die Probe vorwärts gestreute Licht einzusammeln, so dass es unabhängig vom Streuwinkel detektiert werden kann, da dieser insbesondere bei Blutproben variieren kann. Der Einsatz einer Ulbricht-Kugel zur räumlichen Integration der durch die Probe transmittierten Strahlungsanteile ist bevorzugt, da diese die Vorteile bringt, dass auf diese Weise eventuell auftretende Polarisationseffekte vermieden werden, die zu Abweichungen in der detektierten Lichtintensität führen können. Ferner kann auf weitere optische Elemente, wie Linsen oder Spiegel verzichtet werden, die empfindlich gegen mechanische Erschütterungen sind.

Lochblenden sind dem Fachmann allgemein bekannt, sie begrenzen den Strahldurchmesser. Die Verwendung einer Lochblende ist insbesondere bei Verwendung einer Ulbricht-Kugel sinnvoll. Das Verhältnis von Strahldurchmesser zu Port-Größe der Ulbricht-Kugel bestimmt den maximalen Eintrittswinkel in die Ulbricht-Kugel und stellt so sicher, dass ein bestimmter Prozentsatz an vorwärts gestreuten Lichtanteilen auch den Detektor erreicht.

Der Lichtwellenleiter leitet das Licht vom Integrator zum Spektrometer. Alternativ könnte das Spektrometer auch direkt an der Ulbricht-Kugel sitzen.

Wesentliche Voraussetzung bei der Auswahl eines geeigneten Spektrometers ist, dass dieses für den Spektralbereich zwischen 300 nm und 1000 nm sensitiv ist und über eine Schnittstelle verfügt, welche die Daten an einen Mikrocontroller übermitteln kann.

Im Sichtbaren werden typischerweise Gitterspektrometer eingesetzt, die das Licht mithilfe eines dispersiven Elements in seine verschiedenen Wellenlängen aufteilen. Als Detektor wird ein photosensitives Element verwendet, bspw. ein CCD- oder CMOS-basierter Sensor, welcher das eintreffende Licht in ein elektrisches Signal umwandelt, das proportional zur Lichtintensität ist. Das photosensitive Element muss dabei für den Spektralbereich zwischen 300 nm und 1000 nm, bevorzugt zwischen 450 nm und 700 nm sensitiv sein.

Alternativ oder in Ergänzung wird für die Bestimmung von Blutparametern in nicht-hämolysierten Blutproben wenigstens ein opto-chemischer Sensor, auch *Optode* genannt, zur Bestimmung der Blutparameter pH, $pO_2$ und $pCO_2$ verwendet. Mithilfe eines derartigen Sensors ist es auf vorteilhafte Weise denkbar, weitere Blutparameter, wie Glukose, Laktat und/oder die Elektrolyte Kalium, Natrium, Calcium und Magnesium zu erfassen.

Bei Optoden ist ein Indikatorfarbstoff, der nur für einen bestimmten Analyten empfindlich ist, in eine hochspezifische Matrix eingebettet. Diese Matrix kann auf verschiedene Substrate aufgebracht werden, was unterschiedliche Sensordesigns ermöglicht. Der Indikator fungiert als Energiewandler, der durch Bestrahlung mit Licht einer stoffspezifischen Wellenlänge aktiviert wird und dessen Fluoreszenz durch den Analyten reduziert oder sogar ausgelöscht wird, weshalb er auch als Quencher bezeichnet wird.

Bevorzugt werden Optoden in einer Serien- oder Massenproduktion hergestellt, sind vergleichsweise klein und kostengünstig, vor allem dann, wenn andere benötigte elektronische und optische Komponenten wiederholt verwendet werden. Derartige opto-chemische Sensoren benötigen keine separate Referenz und sind weitgehend unempfindlich gegenüber elektromagnetischen Feldern. Sie haben eine ausgezeichnete Empfindlichkeit und Spezifität. Optoden befinden sich im thermodynamischen Gleichgewicht und nicht in einem stationären Zustand. Daher wird der Analyt während der Messung nicht verbraucht und das Signal ist unabhängig von der Strömungsgeschwindigkeit.

Gemäß einer besonders geeigneten Ausführungsform ist wenigstens ein opto-chemischer Sensor zur Erfassung des pH-Werts einer nicht-hämolysierten Blutprobe vorgesehen. Das Prinzip der pH-Messung beruht hierbei vorzugsweise auf einer ratiometrischen Messung der pH-abhängigen Lumineszenz, besonders bevorzugt des Farbstoffs 8-Hydroxypyren-1,3,6-trisulfonsäure-Trinatriumsalz (HPTS, Pyranin), der in einer organisch modifizierten Siliziumdioxid-Hydrogelmatrix (ORMOSIL) immobilisiert ist. Der opto-chemische Sensor oder die Optode ist auf vorteilhafte Weise mit einer zweiten Hydrogelschicht überzogen, die Ruß enthält, um Beeinträchtigungen durch die Fluoreszenz von Probenbestandteilen zu minimieren. Aufgrund des bevorzugt eingesetzten ratiometrischen Messprinzips werden Signaländerungen aufgrund von Fertigungstoleranzen, Leeching, Photo-Bleiche oder Änderungen der Detektorempfindlichkeit eliminiert.

Gemäß einer speziellen Weiterbildung erfolgt die Anregung durch LEDs, besonders bevorzugt mit Strahlung die mit Wellenlängen von 405 nm und 456 nm, wobei die LEDs bevorzugt nebeneinander angeordnet sind. Denkbar ist auch ein Emitter, der abwechselnd bzw. zeitlich nacheinander entsprechende Anregungsstrahlung aussendet.

Bevorzugt dient eine Fotodiode als Detektor. Das Lumineszenzmaximum tritt bei einer speziellen Weiterbildung bei etwa 520 nm auf. In den Anregungs- und Detektionspfaden werden vorzugsweise Glasfarbfilter verwendet, um sie besser voneinander zu trennen. Der pH-Wert ist von der Temperatur abhängig, die daher in einem weiteren Schritt gemäß einer speziellen Weiterbildung kompensiert wird.

In einer weiteren besonders geeigneten Ausführungsform ist wenigstens ein opto-chemischer Sensor zur Erfassung des $pCO_2$-Werts einer nicht-hämolysierten Blutprobe vorgesehen. Der entsprechende opto-chemische

Sensor oder die pCO$_2$-Optode ist im Grunde identisch mit der pH-Optode aufgebaut, hat aber bevorzugt anstelle der zweiten Hydrogelschicht eine dünne Silikonschicht auf der Oberseite. Diese Silikonschicht, insbesondere in Form einer Silikonmembran ist undurchlässig für Ionen, aber besonders durchlässig für Gase. Der Durchgang von CO$_2$ aus der Probe erzeugt eine pH-Verschiebung, die nachgewiesen wird. Dies ist vergleichbar mit dem Aufbau einer Severinghaus pCO$_2$ Elektrode.

Der Kohlendioxidpartialdruck ist abhängig vom örtlichen Luftdruck (Dalton'sches Gesetz) und wird daher bevorzugt in einem letzten Schritt durch einen ebenfalls vorgesehenen Drucksensor kompensiert.

**In** einer weiteren besonders geeigneten Ausführungsform ist wenigstens ein opto-chemischer Sensor zur Erfassung des pO$_2$-Werts einer nicht-hämolysierten Blutprobe vorgesehen. Bevorzugt hierbei wird eine auf Phasenfluorimetrie basierende Lumineszenzmessung durchgeführt, die den Vorteil hat, dass sie nicht durch Änderungen der Lichtquellenintensität und der Detektorempfindlichkeit beeinflusst wird. Diese Messung basiert auf der Löschung der Lumineszenz durch molekularen Sauerstoff, was zu einer Verringerung der Intensität und der Abklingzeit führt. Dabei wird die Intensität der Lichtquelle mit einer bestimmten Frequenz moduliert. Die emittierte Lumineszenz wird ebenfalls moduliert, zeigt aber eine Phasenverschiebung $\theta$ aufgrund der endlichen Lebensdauer des angeregten Zustands.

**In** einer speziellen Ausführungsform verfügt der opto-chemische Sensor zur pO$_2$-Messung über den Indikatorfarbstoff Tris(4,7-diphenyl-1,10-phenanthrolin)ruthenium(II)dichlorid, der bevorzugt in eine transparente Silikonmatrix eingebettet und mit einer schwarzen Silikonmembran bedeckt ist, um die Rückstreuung von der Blutprobe zu verringern.

Die Beziehung zwischen Lumineszenz und Sauerstoffkonzentration wird normalerweise durch die Stern-Volmer-Gleichung (SV) quantifiziert:

$$\frac{I_0}{I} = \frac{\tau_0}{\tau} = 1 + K_{SV} \cdot pO_2$$

wobei $I_0$ und $I$ die Lumineszenzintensitäten in Abwesenheit bzw. in Anwesenheit von Sauerstoff sind. $\tau_0$ und $\tau$ die Abklingzeiten in Abwesenheit bzw. in Anwesenheit von Sauerstoff sind. $K_{SV}$ die Stern-Volmer-Konstante ist und pO$_2$ gibt den Sauerstoffpartialdruck an.

Da der Indikator in eine Silikonmatrix eingebettet ist, weicht die aus der SV resultierende Kurve von ihrem linearen Verhalten ab. Dies kann durch das Vorhandensein von mindestens zwei Umgebungen beschrieben werden, ein sogenanntes Zwei-Seiten-Modell, in dem der Indikator mit unterschiedlichen Raten abgeschreckt wird:

$$\frac{I_0}{I} = \frac{\tau_0}{\tau} = \left( \frac{f_1}{1 + K_{SV1} \cdot pO_2} + \frac{f_2}{1 + K_{SV2} \cdot pO_2} \right)^{-1}$$

wobei $f_1$ und $f_2 = 1 - f_1$ die Anteile der Lumineszenz für jede Komponente unter ungelöschten Bedingungen sind. $K_{SV1}$ und $K_{SV2}$ die zugehörigen Stern-Volmer-Konstanten für jeden Bestandteil sind.

Bei einem einfach-exponentiellen Zerfall gilt für die Beziehung zwischen Phasenverschiebung $\theta$ und der endlichen Lebensdauer des angeregten Zustands $\tau$

$$\tan \theta = \omega \tau$$

wobei $\omega$ die Winkelmodulationsfrequenz der Lichtquelle ist. Der Bereich der geeigneten Modulationsfrequenzen hängt von der Lebensdauer ab und muss groß genug sein, damit die Phasenverschiebung frequenzabhängig ist, aber niedriger als die Frequenzen, bei denen die Modulation nicht mehr messbar ist.

Es ist gängige Praxis, die bei einer einzelnen Frequenz gemessene Phasenverschiebung mit ihrer scheinbaren Lebensdauer in Beziehung zu setzen:

$$\frac{\tan \theta_0}{\tan \theta} = \left( \frac{f}{1 + K_{SV1} \cdot pO_2} + \frac{1 - f}{1 + K_{SV2} \cdot pO_2} \right)^{-1}$$

wobei $\theta_0$ und $\theta$ die Phasenverschiebungen in Abwesenheit bzw. Anwesenheit von Sauerstoff sind. $f$ und $1 - f$ die Anteile der Lumineszenz der einzelnen Komponenten unter ungelöschten Bedingungen (also ohne Sauerstoff) sind. Die Größen $f$, $K_{SV1}$, und $K_{SV2}$ sind frequenzabhängig. Außerdem sind alle Größen temperaturabhängig, so dass die Gleichung wie folgt umgeschrieben werden kann

$$\frac{\tan\theta_0\,(\omega,T)}{\tan\theta\,(w,T,\mathrm{pO}_2)} = \left(\frac{f(\omega,T)}{1+K_{SV1}(\omega,T)\cdot\mathrm{pO}_2} + \frac{1-f(\omega,T)}{1+K_{SV2}(\omega,T)\cdot\mathrm{pO}_2}\right)^{-1}$$

Auf vorteilhafte Weise werden die vom $\mathrm{pO}_2$-Sensor erzeugten Messdaten mithilfe eines künstlichen neuronalen Netzes, das anhand einer Reihe von Kennzahlen K mit

$$K(w,T,\mathrm{pO}_2) \equiv \frac{\tan\theta_0\,(\omega,T)}{\tan\theta\,(w,T,\mathrm{pO}_2)}$$

zur gleichzeitigen Vorhersage von Temperatur T und Sauerstoffpartialdruck $\mathrm{pO}_2$ aus einer Reihe von Messungen bei verschiedenen Modulationsfrequenzen w.

So werden Messungen bei verschiedenen Modulationsfrequenzen zwischen 200 Hz und 100 kHz durchgeführt. Das Signal der Fotodiode wird zusammen mit dem Referenzsignal, das den LED-Stromtreiber antreibt, mit einem schnellen ADC digitalisiert und die Phase wird auf dem Mikrocontroller mit einem Software-Lock-in-Verstärker bestimmt. Ein Satz von Phasenwinkeln dient als Eingabe für das neuronale Netz, das schließlich als Ergebnis den Sauerstoffpartialdruck und die Temperatur liefert. Sie wird daher in einem letzten Schritt durch einen bevorzugt ebenfalls vorgesehenen Drucksensor kompensiert.

Gemäß der Erfindung erhält die Datenauswerteeinheit und/oder der Mikrocontroller die Daten vom Spektrometer und/oder einem Sensor, etwa einem optochemischen Sensor, bereitet diese auf und führt das oder die im Speicher abgelegten prädiktiven Modelle aus, die aus wenigstens einem mit Trainingsdaten, die zumindest teilweise augmentierte Daten enthalten, trainierten Convolutional Neural Network (CNN) bestehen.

Der Mikrocontroller muss leistungsfähig genug sein, um die prädiktiven CNN Modelle auf die Messdaten anwenden zu können, und über die erforderlichen Schnittstellen verfügen. So kann es sich beispielsweise um einen STM32MP157 handeln. Ideal ist es, wenn ein eingebettetes Betriebssystem, beispielsweise Linux, mit einem entsprechenden Software-Framework, wie Tensorflow/Keras oder PyTorch, ausgeführt werden kann.

Bei der Ausgabe kann es sich um eine gängige Schnittstelle, ein Display, einen Drucker oder ein Funkmodul handeln. Typische Beispiele für Schnittstellen sind SPI, I2C, UART oder USB.

Die erfindungsgemäß verwendeten prädiktiven Modelle liegen als Datei im Speicher vor. Sie wurden zuvor über ein CNN trainiert. Das CNN zeichnet sich dadurch aus, dass es über mindestens eine Convolutional Layer verfügt.

In der Convolutional Layer werden die eingehenden Signale mit sogenannten Filterkerneln gefaltet. Die Gewichte der Filterkernel wurden dabei zuvor eingelernt und in Form einer Datei im prädiktiven Modell abgelegt. Das charakteristische und unterscheidbare Vorgehen wird im Folgenden eingehender beschrieben.

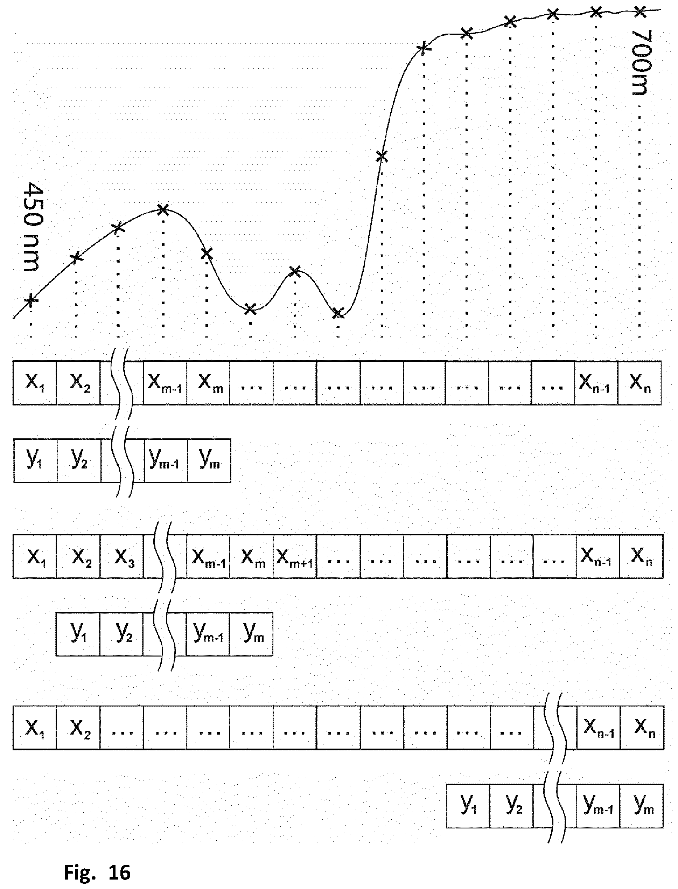

Der Eingangsvektor X für das neuronale Netz besteht aus n Datenpunkten/Werten $x_i$ (i=1... n). Jeder Datenpunkt/Wert entspricht jeweils einem vom Spektrometer erfassten Intensitätswert bei einer bestimmten Wellenlänge $\lambda$. Das verwendete neuronale Netz ist dadurch gekennzeichnet, dass im ersten Schritt eine Faltungsoperation zwischen dem Eingangsvektor und einem oder mehreren sogenannten Filterkerneln durchgeführt wird. Bei den Filterkerneln handelt es sich ebenfalls um Vektoren mit m Datenpunkten/Werten $y_j$ (j=1...m). Die Anzahl der Filterkernel k, deren Länge m sowie die darin enthaltenen Werte $y_j$ wurden zuvor mithilfe von Trainingsdatensätzen ermittelt und unterscheiden sich abhängig von dem aus dem Eingangsvektor zu bestimmenden Blutparameter. Die Länge m kann dabei für jedes Filterkernel unterschiedlich sein. Zwischen jedem Filterkernel und dem Eingangsvektor wird nun eine mathematische Faltungsoperation durchgeführt. Diese ist in Figur 16 anschaulich dargestellt. Zunächst werden jeweils die Datenpunkte mit dem gleichen Laufindex gegenüber angeordnet, d.h. es gilt i=j. Die Werte x und y werden miteinander multipliziert und die einzelnen Ergebnisse der Produkte aufsummiert. Im nächsten Schritt wird der Filterkernel um einen Wert gegen den Eingangsvektor verschoben, d.h. es gilt j=i+1, und die gleiche Rechenoperation ausgeführt. Dies wird so oft durchgeführt, bis der Filterkernel am Ende des Eingangsvektors angekommen ist. Auf diese Weise entstehen k neue Vektoren der Länge n-m+1. Die so entstandenen Vektoren dienen nun wiederum als Eingangsvektoren für die tieferen Schichten des neuronalen Netzes. In diesen Schichten können weitere Faltungsoperationen durchgeführt werden oder alternativ die mit Gewichtungsfaktoren versehenen einzelnen Vektorelemente als Eingangssignale für die in den tieferen Schichten befindlichen Neuronen dienen.

Die eingelernten Gewichte der Filterkernel in Form einer Datei werden im prädiktiven Modell von einem Software Framework, beispielsweise TensorFlow/Keras oder PyTorch, eingelesen und dadurch eine Vorhersage auf neuen, zuvor unbekannten Daten ermöglicht.

Ein verbreitetes Format ist das Hierarchical Data Format (HDF). Wird das CNN bspw. aus TensorFlow/Keras heraus in eine HDFv5 (.h5) File exportiert, so ist die Struktur des CNN zu Beginn im Kopf der Datei beschrieben. Eine 1D Convolutional Layer, wie sie zum Beispiel bei spektroskopischen Daten vorliegt, taucht dann als "Conv1D" sichtbar für den Mikrocontroller auf.

Die mittels CNN trainierten prädiktiven Modelle liegen beispielsweise im HDF5 Format vor. Sie werden mithilfe der auf maschinelles Lernen ausgerichteten Frameworks TensorFlow/Keras erzeugt und erfordern das Vorhandensein von Bestandteilen dieser auf dem Mikrocontroller. Sie erhalten als Eingabe die vom Spektrometer gemessenen Transmissionen über den erfassten Spektralbereich und liefern als Ausgabe die Werte für die Blutparameter. Dabei können auch mehrere Parameter durch ein einziges prädiktives Modell vorhergesagt werden.

Neben einer Vorrichtung betrifft die Erfindung auch ein Verfahren zur spektroskopischen Bestimmung von Parametern in nicht-hämolysierten Blutproben mit den Schritten:

- Emission von Strahlung mit einer Lichtquelle im Wellenlängenbereich zwischen 300 nm und 1000 nm in Richtung eines Messbereichs,
- Anordnen einer zumindest teilweise im Wellenlängenbereich von 300 nm bis 1000 nm optisch transparenten Messküvette mit einer darin befindlichen Blutprobe in einem Messbereich, durch den die Strahlung wenigstens zeitweise während der Messung hindurchgeleitet wird,
- Empfangen des von der durchstrahlten Blutprobe vorwärts gestreuten Lichts mit einem Integrator,
- Zuleiten der vom Integrator empfangenen Strahlung zu einem Spektrometer, durch das zumindest ein Messignal auf der Grundlage wenigstens einer Eigenschaft der Strahlung erzeugt wird und das Messignal wenigstens zeitweise über eine Schnittstelle an eine Datenverarbeitungseinheit mit einem Mikrocontroller übertragen wird, wobei die Datenverarbeitungseinheit und/oder der Mikrocontroller auf der Grundlage des Messignals wenigstens ein Messdatum oder Messdaten erzeugt, die mittels eines prädiktiven Modells ausgewertet werden, das auf wenigstens einem Convolutional Neural Network (CNN) basiert, welches unter Einsatz von Trainingsdaten, die wenigstens teilweise augmentierte Daten enthalten, trainiert wurde und
- Übertragen eines Ergebnisses der Auswertung des Messdatums oder der Messdaten über eine Schnittstelle an eine Ausgabe (10).

**In** einer besonderen Ausführungsform ist vorgesehen, dass

- ein Referenzspektrum $I_R$ im Rahmen einer Transmissionsmessung, mit einem Detektor, in einem Wellenlängenbereich von 300 nm bis 1000 nm ohne absorbierendes und/oder streuendes Medium, beispielsweise einer Blutprobe (5), in einem Strahlengang im Messbereich bestimmt wird,
- zumindest teilweise die Blutprobe in den Strahlengang im Messbereich eingebracht wird,
- ein Probenspektrum $I_P$ im Rahmen einer im Messbereich durchgeführten Transmissionsmessung mit dem Detektor bestimmt wird,
- die Transmission durch die Probe bei verschiedenen Integrationszeiten des Detektors zur Erzeugung eines Messignals auf der Grundlage der auftreffenden Strahlung gemessen wird, während die verwendete Lichtquelle (1) ausgeschaltet ist, um Dunkelspektren $I_{RD}$ und $I_{PD}$ zu erhalten,
- $I_0$ durch Subtraktion von $I_{RD}$ von $I_R$ und $I$ durch Subtraktion von $I_{PD}$ von $I_P$ ermittelt werden,
- Normieren von $I_0$ und $I$, so dass beide eine identische Zeitskala besitzen,
- $I$ durch $I_0$ dividiert wird, um einen Eingangsvektor $X$ für wenigstens ein prädiktives Modell zu ermitteln.
- ein Mittelwert und eine Varianz von $X$ durch hinterlegte Koeffizienten angepasst werden,
- $X$ auf das wenigstens eine hinterlegte prädiktive Modell (12), das auf wenigstens einem Convolutional Neural Network (CNN), das mit Trainingsdaten, die wenigstens teilweise augmentierte Daten enthalten, trainiert wurde, basiert, angewendet wird sowie dass
- eine Information über wenigstens einen Blutparameter der Blutprobe (5) auf der Grundlage zumindest eines durch Anwenden des trainierten prädiktiven Modells (12) erhaltenen Ergebniswerts ausgegeben wird.

Weiterhin ist es von Vorteil, wenn im Convolutional Neural Network (CNN) wenigsten ein Pooling Layer verwendet wird.

Gemäß einer weiteren Ausgestaltung des erfindungsgemäßen Verfahrens ist vorgesehen, dass während der Transmissionsmessung zur Bestimmung des Referenzspektrums destilliertes Wasser, Luft und/oder eine im Wellenlängenbereich von 300 nm bis 1000 nm, insbesondere in einem Wellenlängenbereich von 450 nm bis 700 nm optisch transparente Spüllösung, im Strahlengang angeordnet wird.

Darüber hinaus betrifft die Erfindung auch ein Verfahren zum Auswerten von Messdaten, die mit einem optischen Aufbau aufgrund einer Transmissionsmessung an einer nicht-hämolysierten Blutprobe erzeugt werden, wobei die Messdaten mittels eines als Convolutional Neural Network (CNN) ausgeführten prädiktiven Modells ausgewertet werden, das unter Einsatz von Trainingsdaten, die wenigstens teilweise augmentierte Daten enthalten, trainiert wurde.

Dabei wurden die hinterlegten prädiktiven Modelle zuvor über mindestens ein CNN bestimmt, wobei das CNN über mindestens einen Pooling Layer verfügt.

Gängige chemometrische Verfahren, wie k-OPLS oder die SVR, sind sehr anfällig für Instrumentendrift. Dieser hat einen erheblichen Einfluss auf die Genauigkeit und Zuverlässigkeit eines Spektralphotometers, wie es z.B. bei der sogenannten CO-Oximetrie Anwendung findet.

Grundsätzlich sind dabei zwei Effekte zu unterscheiden:

- Schwankungen in der detektierten Lichtintensität, beispielsweise durch Erwärmung, Verunreinigung oder Abnutzung der verwendeten Lichtquelle, aber auch Änderungen der Detektorsensitivität in Folge von Temperaturschwankungen oder dadurch induzierten mechanischen Spannungen innerhalb der optischen Bank.
- Spektrale Verschiebungen der gemessenen Transmissionsspektren, wie sie durch Temperaturschwankungen bei den im sichtbaren Spektralbereich typischerweise verwendeten Gitterspektrometern auftreten oder durch eine ungenaue, fehlerhafte oder fehlende werkseitige Kalibrierung hervorgerufen werden können.

Mithilfe der erfindungsgemäßen Vorrichtung und des erfindungsgemäßen Verfahrens gelingt die spektroskopische Bestimmung von Blutparametern in nicht-hämolysierten Vollblutproben in-situ mit mobil betriebenen Messgeräten.

Die erfindungsgemäße Vorrichtung und das ebenfalls erfindungsgemäße Verfahren ermöglichen den Betrieb von äußerst robusten, leichten und kompakten mobilen Messgeräten zur spektroskopischen Bestimmung der Sauerstoffsättigung des Blutes und Bestimmung von Blutparametern in nicht hämolysierten Vollblutproben. Es kann dabei sogar auf eine Wellenlängenreferenz und Temperaturstabilisierung des Sensors verzichtet werden.

Die für die Bestimmung der prädiktiven Modelle verwendeten CNN wurden durch experimentelle Arbeiten an einem Laboraufbau ermittelt, die im Folgenden beschrieben sind.

Die Allgemeinheit der Lehre nicht einschränkend wurden zum Nachweis der Leistungsfähigkeit der erfindungsgemäßen Vorrichtung und des erfindungsgemäßen Verfahrens in einem Laboraufbau Transmissionsspektren zu 358 Blutproben von 7 verschiedenen Individuen erfasst und diese zusammen mit den an einem Radiometer OSM 3 CO-Oximeter ermittelten Referenzwerten für ctHb, $O_2Hb$, COHb und MetHb in eine Datenbank überführt.

Der Anteil an HHb wurde ebenfalls in der Datenbank hinterlegt. Er wurde berechnet, indem die Summe der weiteren Hämoglobinderivate $O_2Hb$, COHb und MetHb von 100 % subtrahiert wurden. Über die Zentrifugation von Kapillarröhrchen wurde zudem der Hämatokrit der Proben bestimmt und in der Datenbank hinterlegt.

Vor der Messung wurden die für das optische Verhalten relevanten Blutparameter über einen weiten Bereich experimentell eingestellt und so klinische Krankheitsbilder nachgebildet. Alle Blutproben wurden 3-mal mit phosphatgepufferter Salzlösung (PBS, pH 7.4) gewaschen, um eine undefinierte Variation durch Plasmaproteine zu eliminieren, freies Hämoglobin zu entfernen und die osmotische Konzentration gezielt einstellen zu können.

Der Hämatokrit der Proben wurde durch Zentrifugation und anschließendes Mischen von zellulären und flüssigen Bestandteilen variiert. Da der Hämatokrit hervorragend mit dem ctHb korreliert, konnte auf diese Weise die Menge an Gesamthämoglobin eingestellt werden. Anschließend wurden die Proben in einem Tonometer mit verschiedenen Anteilen von angefeuchtetem $O_2$, $CO_2$ und CO in $N_2$ begast. Die Proben befanden sich dabei in einer hohlen Glaskugel, die kontinuierlich in einem auf 37,2 °C temperierten Wasserbad geschwenkt wurde. Abhängig von der Zusammensetzung und Dauer der Begasung wurden auf diese Weise die fraktionellen Anteile von $O_2Hb$, HHb und COHb eingestellt. Der Anteil an MetHb wurde bei einigen Proben durch Zugabe von Natriumnitrit variiert.

Mit dieser Datenbank wurden anschließend prädiktive Modelle trainiert, welche die Parameter ctHb, $O_2Hb$, HHb, COHb, MetHb und Hämatokrit anhand von Transmissionsspektren neuer, zuvor unbekannter Blutproben vorhersagen können.

Für jeden Parameter wurde ein eigenes prädiktives Modell erstellt. Dies ermöglicht die individuelle Optimierung der Hyperparameter, ist technisch aber nicht zwingend erforderlich. Das Training der prädiktiven Modelle erfolgte mit den auf maschinelles Lernen ausgerichteten Frameworks Scikit-learn und Tensorflow/Keras in der Programmiersprache Python.

Von den Transmissionsspektren wurde zunächst das Hintergrundrauschen subtrahiert, das Resultat auf 1/s normiert und durch die Transmission ohne Blutprobe im Strahlengang dividiert. Negative Werte wurden auf null gesetzt. Anschließend wurden die Daten standardisiert, so dass der Mittelwert Null und die Varianz Eins betrugen. Es erfolgte eine 5-fache Kreuzvalidierung, um eine Unter- bzw. Überanpassung der prädiktiven Modelle zu vermeiden.

Für den Test der Modelle wurden 45 weitere Blutproben von 12 verschiedenen Individuen in dem Laboraufbau optisch vermessen. Die Vorgehensweise war identisch zu der vorherigen, allerdings wurden die Proben nicht mit PBS gewaschen und enthielten daher weiterhin Plasmaproteine. Die Gruppe der für den Test der Modelle verwendeten Individuen war disjunkt mit der für das Training genutzten Gruppe an Individuen.

Zum Nachweis der Leistungsfähigkeit für die CO-Oximetrie wurden verschiedene Algorithmen verglichen: Lineare Regression, Ridge Regression, SVR, Random Forest, Decision Trees, Lasso, Elastic Net, Gradient Boosting, Extreme Gradient Boosting, k-OPLS und CNN. Im Training wurde als Verlustfunktion die mittlere quadratische Abweichung (MSE) verwendet, Ziel war die Maximierung des negativen MSE.

Der Fehler der Vorhersage wurde anhand der Metriken Bestimmtheitsmaß ($R^2$), Wurzel der mittleren quadratischen Abweichung (RMSE) und mittlerer absoluter Fehler (MAE) quantifiziert. Hauptaugenmerk lag auf der Betrachtung des Instrumentendrift.

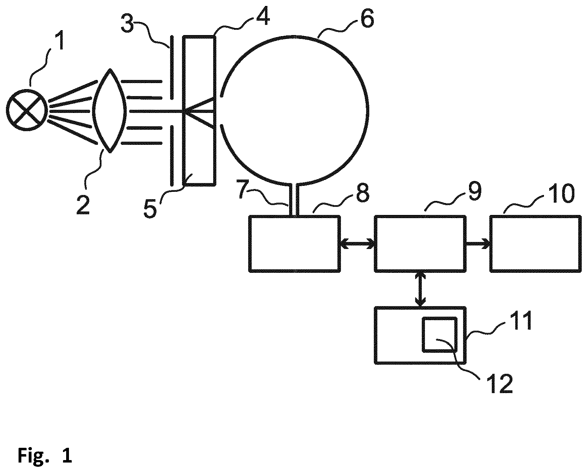

In Figur 1 ist, ohne dass dies den allgemeinen Erfindungsgedanken beschränkt, eine vorteilhafte Ausführungsform einer erfindungsgemäß ausgebildeten Vorrichtung dargestellt. Das von der Lichtquelle 1 emittierte Licht wird mittels einer Linse 2 kollimiert und mit einer Lochblende 3 auf ein definiertes Messfenster eingegrenzt. Das Licht durchleuchtet anschließend eine Küvette 4 in der sich die Blutprobe 5 befindet. Das aus der Blutprobe 5 austretende Licht wird in einer Ulbricht-Kugel 6 gesammelt und mittels eines Lichtleiters 7 auf einen spektral auflösenden Sensor 8 geleitet. Die von dem Sensor 8 gemessenen spektral aufgelösten Lichtintensitäten werden mittels eines Mikroprozessors 9 einer Datenverarbeitungseinheit erfasst, in einem Speicher 11 abgelegt und durch ein ebenfalls dort gespeichertes durch ein Convolutional Neural Network (CNN) trainiertes prädiktives Modell 12 verarbeitet. Die durch das CNN extrahierten Blutparameter, beispielsweise ctHb, $O_2$Hb, HHb, COHb, MetHb und Hämatokrit werden anschließend auf einer Anzeigeeinheit 10 ausgegeben.

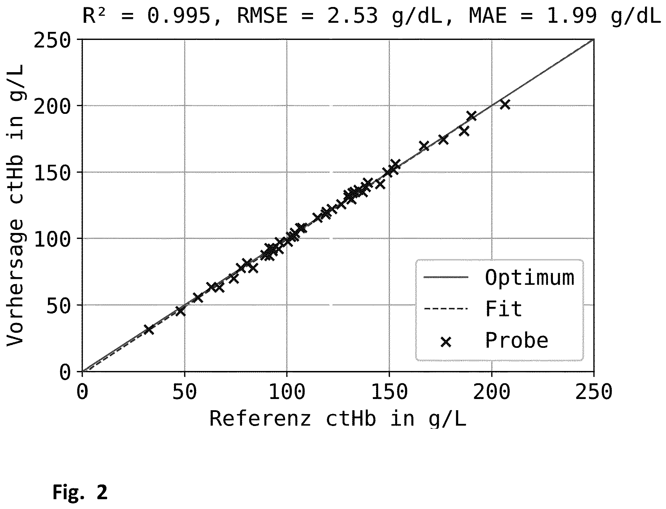

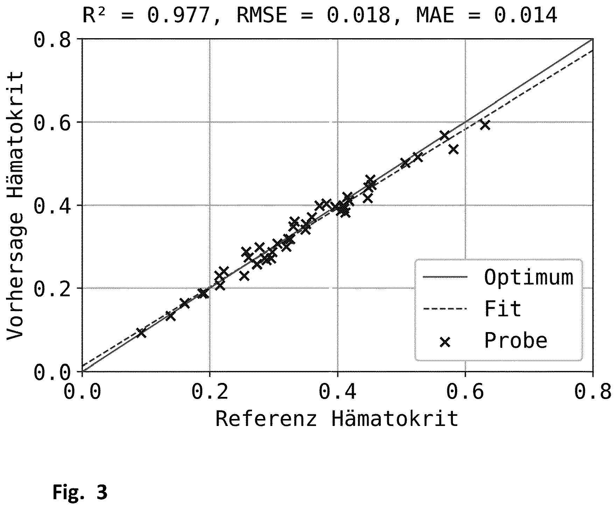

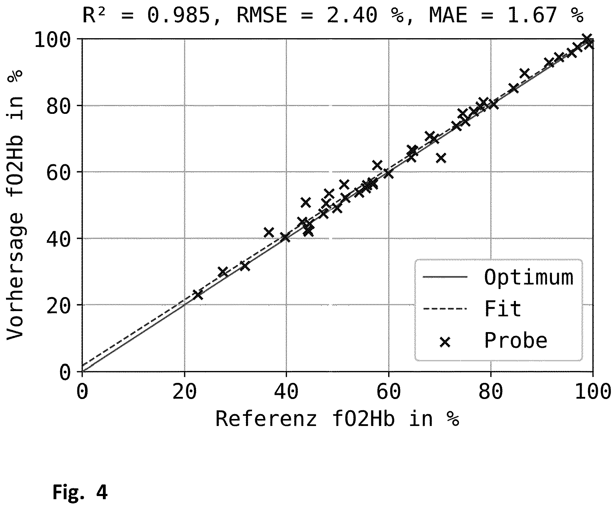

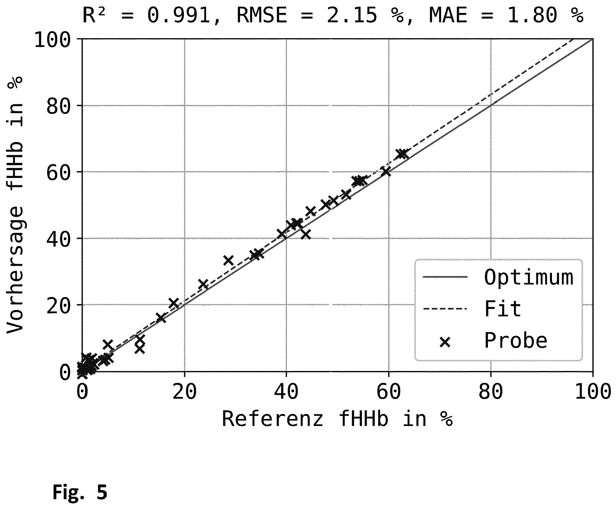

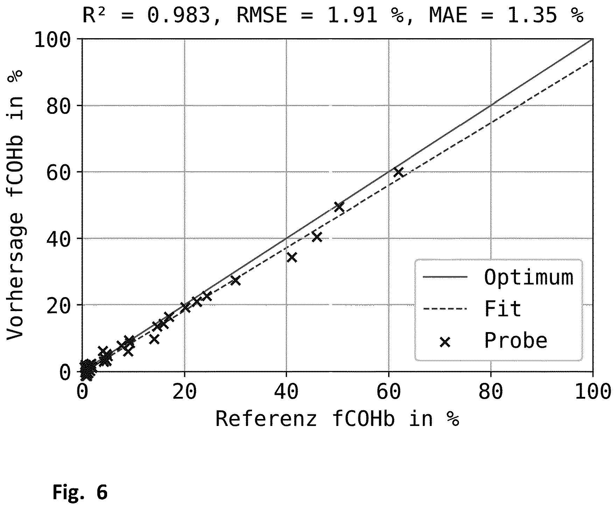

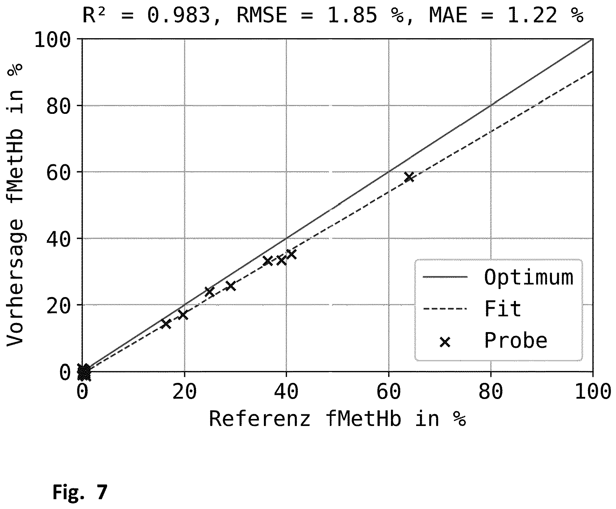

Figuren 2 bis 7 zeigen die hohe Genauigkeit des erfindungsgemäßen Verfahrens unter Einsatz von CNN bei der Vorhersage der Blutparameter Konzentration an Gesamthämoglobin (ctHb) (Fig. 2), Hämatokrit (Fig. 3), oxygeniertes Hämoglobin ($O_2$Hb) (Fig. 4), desoxygeniertes Hämoglobin (HHb) (Fig. 5), Carboxyhämoglobin (COHb) (Fig. 6) und Methämoglobin (Hi) (Fig. 7). Jedes Kreuz repräsentiert dabei eine Probe aus dem Testdatensatz, die durchgezogene Linie das Optimum bei vollständiger Übereinstimmung mit der Referenz und die gestrichelte Linie die Ausgleichsfunktion nach Anwendung der erfindungsgemäßen Vorrichtung und des erfindungsgemäßen Verfahrens.

Um die Vorhersagegenauigkeit des erfindungsgemäßen Verfahrens unter Bedingungen zu bewerten, die bei Messungen mit mobil betriebenen Messgeräten insbesondere In-situ-Messungen und resultierenden Instrumentendrift auftreten, wurde wie folgt vorgegangen.

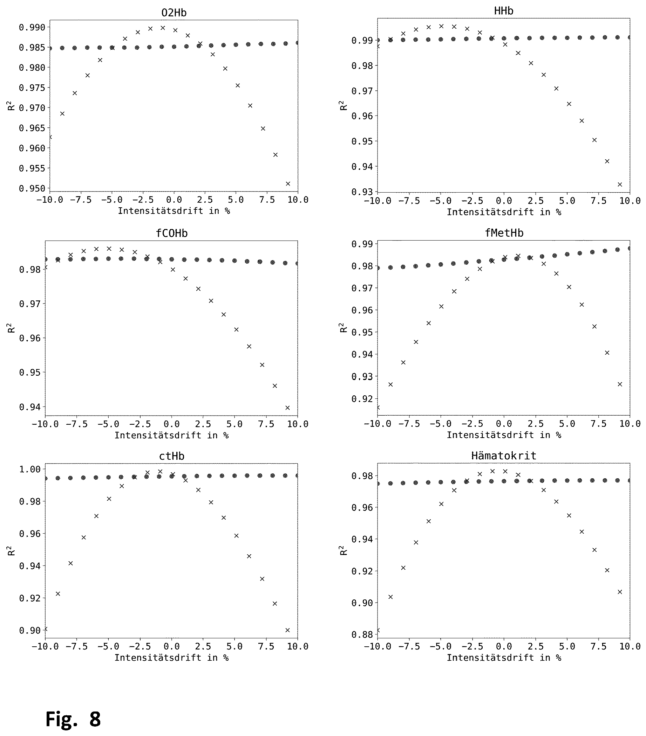

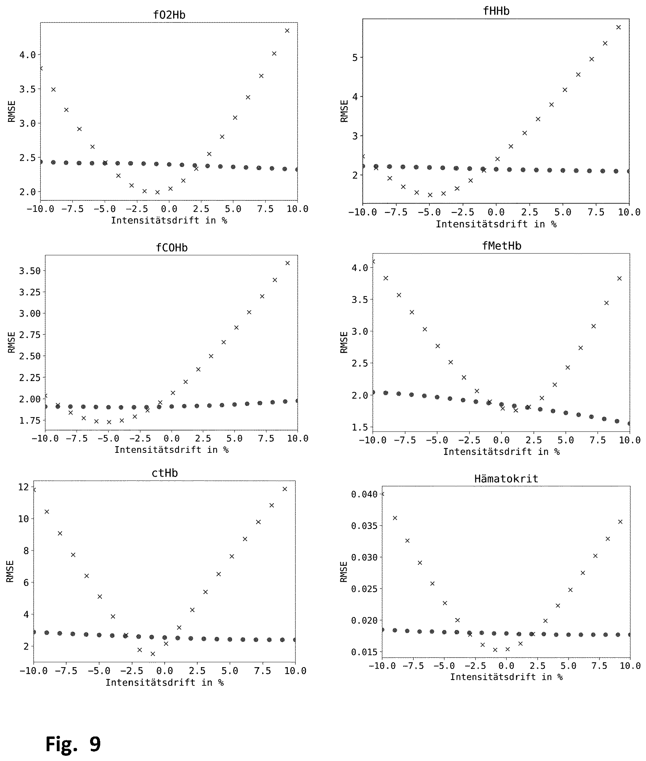

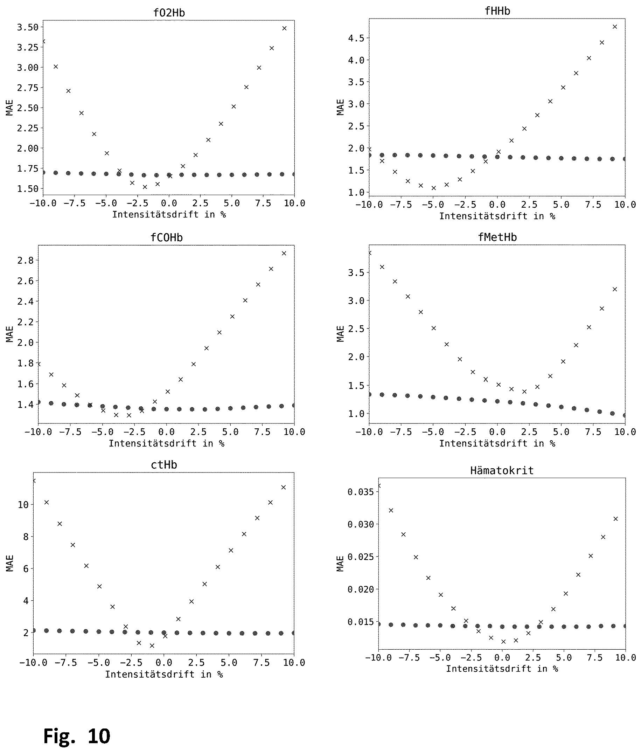

Es erfolgte ein Vergleich der erfindungsgemäß, unter Einsatz eines CNN folgenden Vorhersagen, mit denen von k-OPLS, welche als Stand der Technik angesehen werden können. Auf dem Testdatensatz wurden dazu die Konzentration an Gesamthämoglobin (ctHb), der Hämatokrit, sowie die fraktionellen Anteile an oxygeniertem Hämoglobin ($O_2$Hb), desoxygeniertem Hämoglobin (HHb), Carboxyhämoglobin (COHb) und Methämoglobin (Hi) vorhergesagt, während die detektierte Lichtintensität um $\pm 10\ \%$ variierte. Der Drift der detektierten Intensität um -10 % bis +10 % wurde durch eine Multiplikation der Transmission mit Werten zwischen 0,9 bis 1,1 über alle Wellenlängen für alle Beobachtungen im Testdatensatz nachgebildet. Der Fehler der Vorhersage wurde anhand der Metriken Bestimmtheitsmaß ($R^2$) (Fig. 8), Wurzel der mittleren quadratischen Abweichung (RMSE) (Fig. 9) und mittlerer absoluter Fehler (MAE) (Fig. 10) quantifiziert. Die Kreuze zeigen den Verlauf der Genauigkeit unter Instrumentendrift beim Stand der Technik (k-OPLS), die Punkte zeigen den Verlauf der Genauigkeit unter Instrumentendrift beim erfindungsgemäßen Verfahren (CNN). Beim $R^2$ sind höhere Werte besser, bei RMSE und MAE niedrigere Werte.

Es zeigt sich die deutliche Überlegenheit des erfindungsgemäßen Verfahrens (CNN) gegenüber dem derzeitigen Stand der Technik (k-OPLS). Bei einer Abweichung der detektierten Lichtintensität um -10 % liegt der Fehler mit k-OPLS um bis zu Faktor 5 höher als mit CNN (ctHb, MAE). Der Einsatz des erfindungsgemäßen Verfahrens reduziert den Vorhersagefehler durchweg bei allen Parametern.

Um die Vorhersagegenauigkeit bei spektraler Verschiebung der gemessenen Transmissionsspektren zu bewerten wurde diese durch eine 1D-Interpolation der gemessenen Transmission aller Beobachtungen auf einen zwischen -2 nm und +2 nm verschobenen Wellenlängenvektor nachgebildet. Quantifiziert wurde der Fehler anhand der Metriken Bestimmtheitsmaß ($R^2$) (Fig. 11), Wurzel der mittleren quadratischen Abweichung (RMSE) (Fig. 12) und mittlerer absoluter Fehler (MAE) (Fig. 13). Beim $R^2$ sind höhere Werte besser, bei RMSE und MAE niedrigere Werte.

Die dabei angenommene Linearität der Verschiebung über den vollständigen Spektralbereich basiert auf experimentellen Messungen an Gitterspektrometern, die einem Temperaturdrift ausgesetzt waren. Die nachgebildete spektrale Verschiebung von +2 nm entspricht einer Temperaturänderung von etwa 40 K. Dabei zeigt sich ebenfalls eine deutliche Überlegenheit des erfindungsgemäßen Verfahrens (CNN) gegenüber dem derzeitigen Stand der Technik (k-OPLS). Der Fehler mit k-OPLS liegt bis zu Faktor 8 höher als bei CNN (COHb, MAE). Das Bestimmungsmaß wird mit k-OPLS bei der Vorhersage von COHb sogar negativ. Der Einsatz des erfindungsgemäßen Verfahrens reduziert auch hier den Vorhersagefehler durchweg bei allen Parametern.

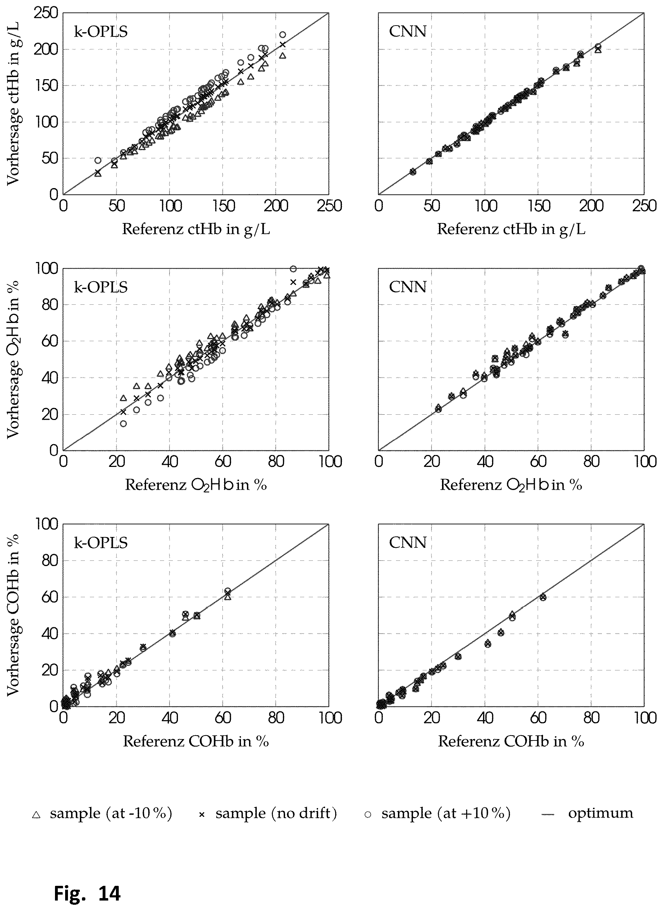

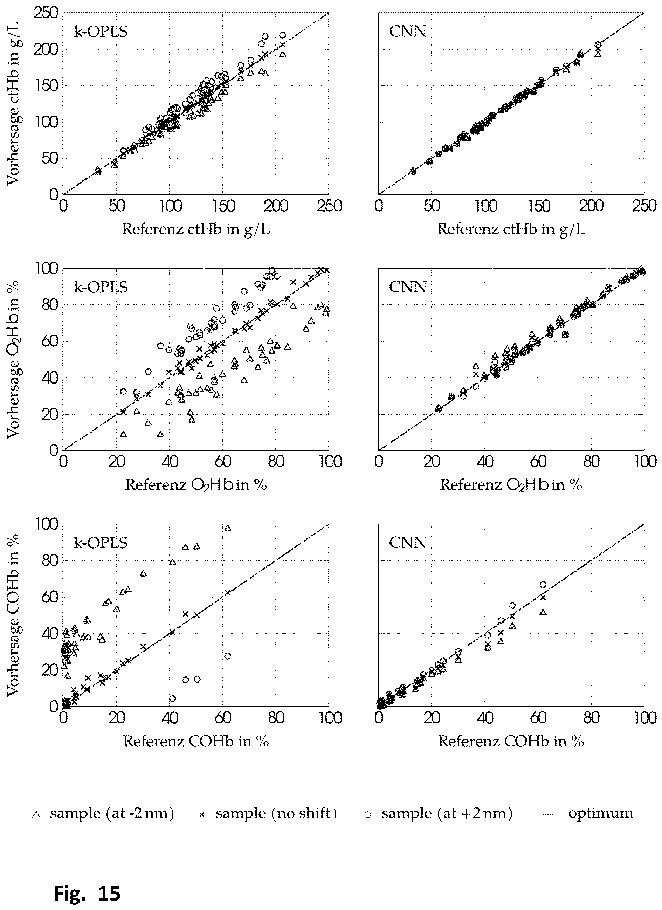

Zum weiteren Vergleich der erfindungsgemäß unter Einsatz eines CNN folgenden Vorhersagen mit denen von k-OPLS, welche als Stand der Technik angesehen werden können, werden beispielhaft die Vorhersagen von ctHb, $O_2$Hb und COHb unter dem Einfluss von Instrumentendrift gezeigt. Für jeden Einfluss, Drift der detektierten Intensität um $\pm 10\ \%$ (Fig. 14) und eine spektrale Verschiebung um $\pm 2$ nm (Fig. 15), sind die extremsten Randbedingungen dargestellt. Jedes Kreuz repräsentiert eine Probe aus dem Testdatensatz.

Verzeichnis der Figuren:

Figur 1: Schema der erfindungsgemäßen Vorrichtung

Figur 2: Genauigkeit des erfindungsgemäßen Verfahrens bei der Vorhersage von ctHb

Figur 3: Genauigkeit des erfindungsgemäßen Verfahrens bei der Vorhersage von Hämatokrit

Figur 4: Genauigkeit des erfindungsgemäßen Verfahrens bei der Vorhersage von $O_2Hb$

Figur 5: Genauigkeit des erfindungsgemäßen Verfahrens bei der Vorhersage von HHb

Figur 6: Genauigkeit des erfindungsgemäßen Verfahrens bei der Vorhersage von COHb

Figur 7: Genauigkeit des erfindungsgemäßen Verfahrens bei der Vorhersage von Hi

Figur 8: Verlauf der Genauigkeit unter Instrumentendrift in Form von Schwankungen in der detektierten Lichtintensität bei Vorhersage der Konzentration von ctHb, Hämatokrit, sowie den fraktionellen Anteile an $O_2Hb$, HHb, COHb und Hi beim Stand der Technik (k-OPLS) (Kreuze) und erfindungsgemäßen Verfahren (CNN) (Punkte), charakterisiert über das Bestimmungsmaß $R^2$.

Figur 9: Verlauf der Genauigkeit unter Instrumentendrift in Form von Schwankungen in der detektierten Lichtintensität bei Vorhersage der Konzentration von ctHb, Hämatokrit, sowie den fraktionellen Anteile an $O_2Hb$, HHb, COHb und Hi beim Stand der Technik (k-OPLS) (Kreuze) und erfindungsgemäßen Verfahren (CNN) (Punkte), charakterisiert über die mittlere quadratische Abweichung (RMSE).

Figur 10: Verlauf der Genauigkeit unter Instrumentendrift in Form von Schwankungen in der detektierten Lichtintensität bei Vorhersage der Konzentration von ctHb, Hämatokrit, sowie den fraktionellen Anteile an $O_2Hb$, HHb, COHb und Hi beim Stand der Technik (k-OPLS) (Kreuze) und erfindungsgemäßen Verfahren (CNN) (Punkte), charakterisiert über die mittlere absolute Abweichung (MAE).

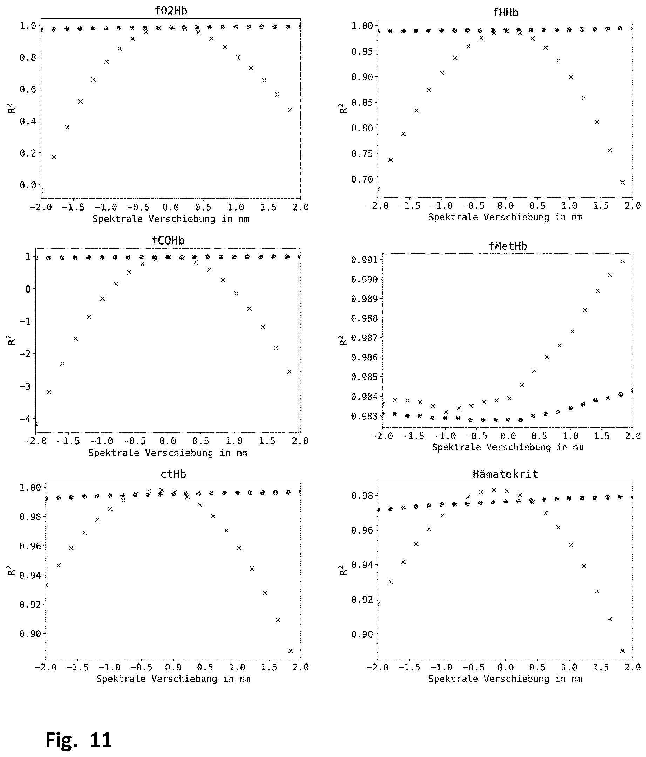

Figur 11: Verlauf der Genauigkeit unter Instrumentendrift in Form von spektraler Verschiebung bei Vorhersage der Konzentration von ctHb, Hämatokrit, sowie den fraktionellen Anteile an $O_2Hb$, HHb, COHb und Hi beim Stand der Technik (k-OPLS) (Kreuze) und erfindungsgemäßen Verfahren (CNN) (Punkte), charakterisiert über das Bestimmungsmaß $R^2$.

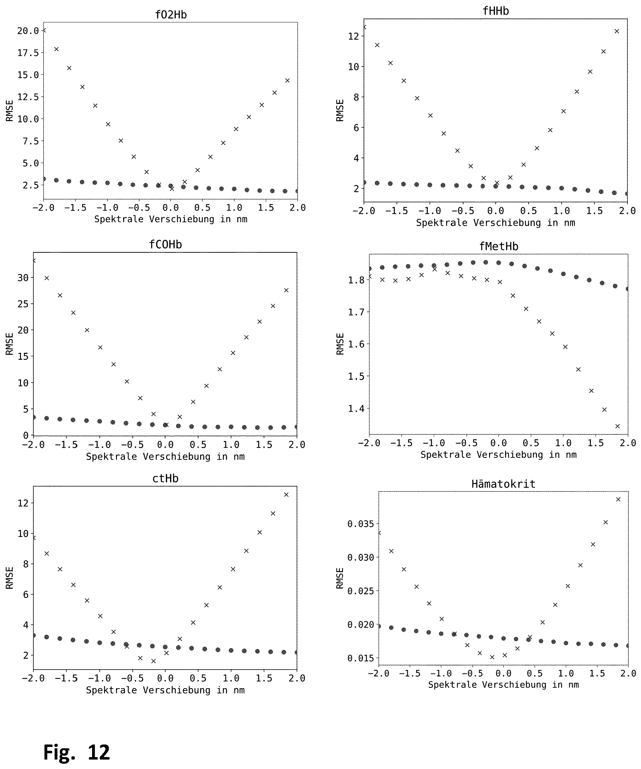

Figur 12: Verlauf der Genauigkeit unter Instrumentendrift in Form von spektraler Verschiebung bei Vorhersage der Konzentration von ctHb, Hämatokrit, sowie den fraktionellen Anteile an $O_2Hb$, HHb, COHb und Hi beim Stand der Technik (k-OPLS) (Kreuze) und erfindungsgemäßen Verfahren (CNN) (Punkte), charakterisiert über die mittlere quadratische Abweichung (RMSE).

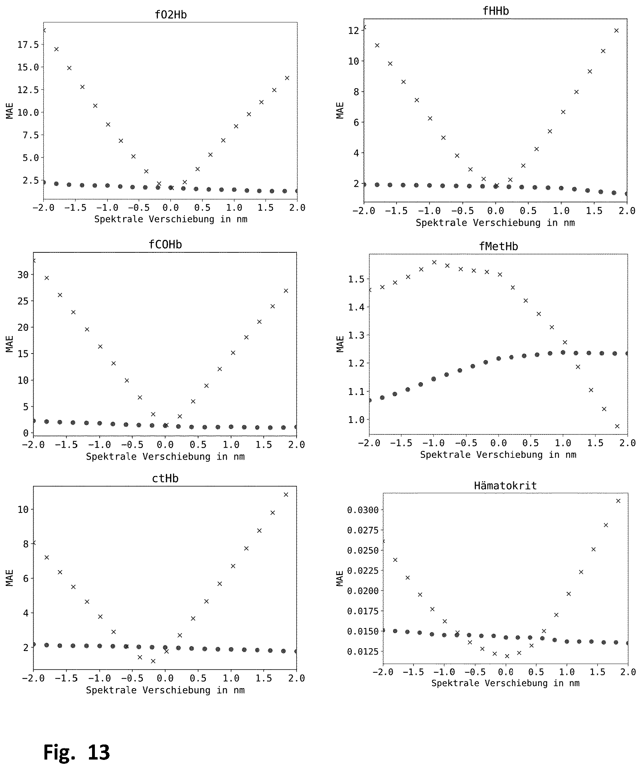

Figur 13: Verlauf der Genauigkeit unter Instrumentendrift in Form von spektraler Verschiebung bei Vorhersage der Konzentration von ctHb, Hämatokrit, sowie den fraktionellen Anteile an $O_2Hb$, HHb, COHb und Hi beim Stand der Technik (k-OPLS) (Kreuze) und erfindungsgemäßen Verfahren (CNN) (Punkte), charakterisiert über die mittlere absolute Abweichung (MAE).

Figur 14: Maximaler Fehler in der Vorhersage von ctHb, O2Hb und COHb unter Instrumentendrift in Form von Schwankungen in der detektierten Lichtintensität beim Stand der Technik (k-OPLS) (linke Spalte) und erfindungsgemäßen Verfahren (CNN) (rechte Spalte).

Figur 15: Maximaler Fehler in der Vorhersage von ctHb, O2Hb und COHb unter Instrumentendrift in Form von spektraler Verschiebung beim Stand der Technik (k-OPLS) (linke Spalte) und erfindungsgemäßen Verfahren (CNN) (rechte Spalte).

Figur 16: Charakteristische Behandlung der eingehenden Signale im CNN

Bezugszeichenliste:

1 Lichtquelle
2 Linse
3 Lochblende
4 Messküvette

EP 4 359 764 B1

5 Probe
6 Integrator
7 Lichtwellenleiter
8 Spektrometer
9 Mikrocontroller
10 Ausgabe
11 Speicher
12 prädiktives Modell mit CNN

**Patentansprüche**

1. Spektroskopie-Vorrichtung zur Bestimmung von Blutparametern in nicht-hämolysierten Blutproben (5) mit wenigstens einer Lichtquelle (1) zur Emission von Strahlung im Wellenlängenbereich zwischen 300 nm und 1000 nm, mit einer während einer Messung die Blutprobe aufnehmenden Messküvette (4), die wenigstens in einem Messbereich, durch den die Strahlung wenigstens zeitweise während der Messung hindurchtritt, optisch transparent ist, mit einem Integrator (6), der eingerichtet ist, das von der durchstrahlten Blutprobe (5) vorwärts gestreute Licht zu empfangen, mit einem Spektrometer (8), dem die vom Integrator (6) empfangene Strahlung zugeleitet wird und mit einer Datenverarbeitungseinheit, die einen Mikrocontroller (9) aufweist, wobei das Spektrometer (8) eingerichtet ist, ein Messsignal auf der Grundlage wenigstens einer Eigenschaft der Strahlung zu erzeugen und wenigstens zeitweise über eine Schnittstelle an die Datenverarbeitungseinheit zu übertragen und wobei die Datenverarbeitungseinheit und/oder der Mikrocontroller (9) eingerichtet ist, um auf der Grundlage des Messsignals Messdaten zu erzeugen und die Messdaten mit wenigstens einem prädiktiven Modell (12) basierend auf einem mit Trainingsdaten, die wenigstens teilweise augmentierte Daten enthalten, trainierten Convolutional Neural Network (CNN), auszuwerten und ein Ergebnis der Auswertung über eine Schnittstelle an eine Ausgabe (10) zu übertragen.

2. Vorrichtung nach Anspruch 1,
**dadurch gekennzeichnet, dass** der Integrator (6) eine Ulbricht-Kugel aufweist.

3. Vorrichtung nach Anspruch 1 oder 2,
**dadurch gekennzeichnet, dass** zwischen dem Integrator (6) und dem Spektrometer (8) ein Lichtwellenleiter (7) zur wenigstens teilweisen Übertragung der Strahlung angeordnet ist.

4. Vorrichtung nach einem der vorangehenden Ansprüche,
**dadurch gekennzeichnet, dass** der Integrator (6) an das Spektrometer (8) angrenzt.

5. Vorrichtung nach einem der vorangehenden Ansprüche,
**dadurch gekennzeichnet, dass** die Datenverarbeitungseinheit einen Datenspeicher (11) aufweist oder über eine drahtgebundene oder drahtlose Datenübertragungsstrecke mit einem Datenspeicher (11) verbunden ist, auf dem wenigstens zeitweise das mit einem Convolutional Neural Network (CNN) trainierte prädiktiven Modell (12) abgelegt ist.

6. Vorrichtung nach einem der vorangehenden Ansprüche,
**dadurch gekennzeichnet, dass** das prädiktive Modell (12) durch ein Convolutional Neural Network (CNN), das wenigstens einen Convolutional Layer aufweist, trainiert wurde und/oder wenigstens eine Datei mit durch das Convolutional Neural Network (CNN) trainierten Gewichten von Filterkerneln aufweist.

7. Vorrichtung nach Anspruch 6,
**dadurch gekennzeichnet, dass** die Datenverarbeitungseinheit eingerichtet ist, um die trainierten Gewichte von Filterkerneln mit einem Software-Framework in das prädiktive Modell (12) einzulesen.

8. Verfahren zum Auswerten von Messdaten, die mit einem optischen Aufbau aufgrund einer Transmissionsmessung an einer nicht-hämolysierten Blutprobe (5) erzeugt werden, wobei die Messdaten mittels eines als Convolutional Neural Network (CNN) ausgeführten prädiktiven Modells (12) ausgewertet werden, das mit einem unter Einsatz von Trainingsdaten, die wenigstens teilweise augmentierte Daten enthalten, trainiert wurde.

9. Verfahren nach Anspruch 8 zur Bestimmung von Blutparametern in nicht-hämolysierten Blutproben (5) mit den Schritten:

14

- Emission von Strahlung mit einer Lichtquelle (1) im Wellenlängenbereich zwischen 300 nm und 1000 nm in Richtung eines Messbereichs,
- Anordnen einer zumindest teilweise im Wellenlängenbereich von 300 nm bis 1000 nm optisch transparenten Messküvette (4) mit einer darin befindlichen Blutprobe in einem Messbereich, durch den die Strahlung wenigstens zeitweise während der Messung hindurchgeleitet wird,
- Empfangen des von der durchstrahlten Blutprobe (5) vorwärts gestreuten Lichts mit einem Integrator (6)
- Zuleiten der vom Integrator (6) empfangenen Strahlung zu einem Spektrometer, durch das zumindest ein Messignal auf der Grundlage wenigstens einer Eigenschaft der Strahlung erzeugt wird und das Messignal wenigstens zeitweise über eine Schnittstelle an eine Datenverarbeitungseinheit mit einem Mikrocontroller (9) übertragen wird,

wobei die Datenverarbeitungseinheit und/oder der Mikrocontroller (9) auf der Grundlage des Messignals wenigstens ein Messdatum oder Messdaten erzeugt, die mittels eines prädiktiven Modells (12) ausgewertet werden, das wenigstens ein Convolutional Neural Network (CNN) aufweist, welches unter Einsatz von Trainingsdaten, die wenigstens teilweise augmentierte Daten enthalten, trainiert wurde und ein Ergebnis der Auswertung des Messdatums oder der Messdaten über eine Schnittstelle an eine Ausgabe (10) übertragen wird.

10. Verfahren nach Anspruch 9,
**dadurch gekennzeichnet, dass**

- ein Referenzspektrum $I_R$ im Rahmen einer Transmissionsmessung mit einem Detektor, ohne in einem Wellenlängenbereich von 300 nm bis 1000 nm absorbierendes und/oder streuendes Medium in einem Strahlengang im Messbereich bestimmt wird, ohne dass die Blutprobe (5) im Strahlengang im Messbereich angeordnet ist,
- zumindest teilweise die Blutprobe (5) in den Strahlengang im Messbereich eingebracht wird,
- ein Probenspektrum $I_P$ im Rahmen einer im Messbereich mit dem Detektor durchgeführten Transmissionsmessung bestimmt wird,
- die Transmission durch die Probe bei verschiedenen Integrationszeiten des Detektors zur Erzeugung eines Messignals auf der Grundlage der auftreffenden Strahlung gemessen wird, während die verwendete Lichtquelle (1) ausgeschaltet ist, um Dunkelspektren $I_{RD}$ und $I_{PD}$ zu erhalten,
- $I_0$ durch Subtraktion von $I_{RD}$ von $I_R$ und $I$ durch Subtraktion von $I_{PD}$ von $I_P$ ermittelt werden,
- Normieren von $I_0$ und $I$, so dass beide eine identische Zeitskala besitzen,
- $I$ durch $I_0$ dividiert wird, um einen Eingangsvektor $X$ für wenigstens ein prädiktives Modell zu ermitteln.
- ein Mittelwert und eine Varianz von $X$ durch hinterlegte Koeffizienten angepasst werden,
- $X$ auf das wenigstens eine hinterlegte prädiktive Modell (12), das auf wenigstens einem Convolutional Neural Network (CNN), das mit Trainingsdaten, die wenigstens teilweise augmentierte Daten enthalten, trainiert wurde, basiert, angewendet wird sowie dass
- eine Information über wenigstens einen Blutparameter der Blutprobe (5) auf der Grundlage zumindest eines durch Anwenden des trainierten prädiktiven Modells (12) erhaltenen Ergebniswerts ausgegeben wird.

11. Verfahren nach Anspruch 9 oder 10,
**dadurch gekennzeichnet, dass** im Convolutional Neural Network (CNN) wenigstens ein Pooling Layer verwendet werden.

12. Verfahren nach einem der Ansprüche 9 bis 11,
**dadurch gekennzeichnet, dass** während der Transmissionsmessung zur Bestimmung des Referenzspektrums destilliertes Wasser, Luft und/oder eine im Wellenlängenbereich von 300 nm bis 1000 nm, insbesondere in einem Wellenlängenbereich von 450 nm bis 700 nm optisch transparente Spüllösung im Strahlengang angeordnet wird.

## Claims

1. A spectroscopic device for determining blood parameters in non-hemolyzed blood samples (5), having at least one light source (1) for emitting radiation in the wavelength range between 300 nm and 1000 nm, a measurement cuvette (4) that receives the blood sample during a measurement, which is optically transparent at least in a measurement region through which the radiation passes at least intermittently during the measurement, an integrator (6) configured to receive light scattered forward by the irradiated blood sample (5), a spectrometer (8), to which the radiation received by the integrator (6) is fed, and a data processing unit comprising a microcontroller (9), wherein the spectrometer (8) is configured to generate a measurement signal based on at least one property of the radiation and to transmit it at least intermittently to the data processing unit via an interface, and wherein the data processing unit and/or the microcontroller (9) is configured to generate measurement data based on the measurement signal and to evaluate the measurement data using at least one predictive model (12) based on a convolutional neural network (CNN) trained with training data that at least partially contains augmented data, and to transmit a result of the evaluation to an output (10) via an interface.

2. The device according to claim 1,
   **characterized in that** the integrator (6) comprises an Ulbricht sphere.

3. The device according to claim 1 or 2,
   **characterized in that** an optical fiber (7) for at least partially transmitting the radiation is arranged between the integrator (6) and the spectrometer (8).

4. The device according to any one of the preceding claims,
   **characterized in that** the integrator (6) is adjacent to the spectrometer (8).

5. The device according to any one of the preceding claims,
   **characterized in that** the data processing unit comprises a data storage device (11) or is connected, via a wired or wireless data transmission link, to a data storage device (11), on which the predictive model (12) trained with a convolutional neural network (CNN) is stored at least temporarily.

6. The device according to any one of the preceding claims,
   **characterized in that** the predictive model (12) has been trained by a convolutional neural network (CNN) comprising at least one convolutional layer and/or comprises at least one file containing filter kernel weights trained by the convolutional neural network (CNN).

7. The device according to claim 6,
   **characterized in that** the data processing unit is configured to load the trained filter kernel weights into the predictive model (12) using a software framework.

8. A method for evaluating measurement data generated by an optical setup based on a transmission measurement on a non-hemolyzed blood sample (5), wherein the measurement data is evaluated by means of a predictive model (12) implemented as a Convolutional Neural Network (CNN) that has been trained using training data at least partially containing augmented data.

9. The method according to claim 8 for determining blood parameters in non-hemolyzed blood samples (5), comprising the steps of:

   - emitting radiation with a light source (1) in the wavelength range between 300 nm and 1000 nm towards a measurement area,
   - arranging a measurement cuvette (4), that is optically transparent at least partially in the wavelength range from 300 nm to 1000 nm, containing a blood sample in a measurement region through which the radiation is passed at least intermittently during the measurement,
   - receiving the light scattered forward by the irradiated blood sample (5) with an integrator (6),
   - feeding the radiation received by the integrator (6) to a spectrometer, which generates at least one measurement signal based on at least one property of the radiation, and transmits the measurement signal at least intermittently to a data processing unit with a microcontroller (9) via an interface,

   wherein the data processing unit and/or the microcontroller (9) generates, based on the measurement signal, at least one measurement datum or measurement data, which is evaluated using a predictive model (12), which comprises at least one convolutional neural network (CNN) that has been trained using training data at least partially containing augmented data, and a result of the evaluation of the measurement datum or the measurement data is transmitted to an output (10) via an interface.

10. The method according to claim 9,
    **characterized in that**

- a reference spectrum $I_R$ is determined as part of a transmission measurement using a detector, without a medium absorbing and/or scattering in a wavelength range from 300 nm to 1000 nm in a beam path in the measurement range, without the blood sample (5) being positioned in the beam path in the measurement range,
- the blood sample (5) is introduced, at least partially, into the beam path in the measurement range,
- a sample spectrum $I_P$ is determined as part of a transmission measurement performed in the measurement range using the detector,
- the transmission through the sample is measured at various detector integration times to generate a measurement signal based on the incident radiation, while the light source (1) used is switched off, in order to obtain dark spectra $I_{RD}$ and $I_{PD}$,
- $I_0$ is determined by subtracting $I_{RD}$ from $I_R$ and $I$ by subtracting $I_{PD}$ from $I_P$,
- $I_0$ and $I$ are normalized, so that both have an identical time scale,
- $I$ is divided by $I_0$ to determine an input vector $X$ for at least one predictive model,
- a mean and a variance of $X$ are adjusted using stored coefficients,
- X is applied to the at least one stored predictive model (12), which is based on at least one convolutional neural network (CNN) trained using training data that at least partially includes augmented data, and that
- information regarding at least one blood parameter of the blood sample (5) is output based on at least one result value obtained by applying the trained predictive model (12).

**11.** The method according to claim 9 or 10,
**characterized in that** at least one pooling layer is used in the convolutional neural network (CNN).

**12.** The method according to any one of claims 9 to 11,
**characterized in that**, during the transmission measurement for determining the reference spectrum, distilled water, air and/or a flushing solution optically transparent in the wavelength range of 300 nm to 1000 nm, particularly in a wavelength range of 450 nm to 700 nm, is arranged in the beam path.

## Revendications

**1.** Dispositif de spectroscopie destiné à la détermination de paramètres sanguins dans des échantillons de sang non hémolysés (5), qui comprend au moins une source lumineuse (1) émettant un rayonnement dans la gamme de longueurs d'onde comprise entre 300 nm et 1 000 nm, une cuvette de mesure (4) recevant l'échantillon de sang pendant une mesure, qui est optiquement transparente au moins dans une zone de mesure traversée par le rayonnement au moins temporairement pendant la mesure, un intégrateur (6) agencé pour recevoir la lumière diffusée vers l'avant par ledit échantillon de sang (5) traversé par le rayonnement, un spectromètre (8) vers lequel le rayonnement reçu par ledit intégrateur (6) est acheminé, et une unité de traitement de données comprenant un microcontrôleur (9), ledit spectromètre (8) étant agencé pour générer un signal de mesure sur la base d'au moins une propriété du rayonnement et pour le transmettre, au moins temporairement, à ladite unité de traitement de données via une interface, et ladite unité de traitement de données et/ou ledit microcontrôleur (9) étant agencé pour générer des données de mesure sur la base du signal de mesure et pour évaluer les données de mesure à l'aide d'au moins un modèle prédictif (12) basé sur un réseau neuronal convolutif (CNN) entraîné à l'aide de données d'apprentissage qui contiennent au moins en partie des données augmentées, et pour transmettre un résultat de cette évaluation via une interface à une sortie (10).

**2.** Dispositif selon la revendication 1,
**caractérisé en ce que** ledit intégrateur (6) comporte une sphère d'Ulbricht.

**3.** Dispositif selon la revendication 1 ou 2,
**caractérisé en ce qu'**une fibre optique (7) est disposée entre ledit intégrateur (6) et ledit spectromètre (8) pour la transmission au moins partielle du rayonnement.

**4.** Dispositif selon l'une des revendications précédentes,
**caractérisé en ce que** ledit intégrateur (6) est adjacent audit spectromètre (8).

**5.** Dispositif selon l'une des revendications précédentes,
**caractérisé en ce que** ladite unité de traitement de données comporte une mémoire de données (11) ou est reliée, par une liaison de transmission de données filaire ou sans fil, à une mémoire de données (11) sur laquelle est stocké, au moins temporairement, ledit modèle prédictif (12) entraîné à l'aide d'un réseau neuronal convolutif (CNN).

6.  Dispositif selon l'une des revendications précédentes,
    **caractérisé en ce que** ledit modèle prédictif (12) a été entraîné par un réseau neuronal convolutif (CNN) qui comporte au moins une couche convolutive, a été entrainé et/ou comporte au moins un fichier contenant des poids de noyaux de filtrage entraînés à l'aide dudit réseau neuronal convolutif (CNN).

7.  Dispositif selon la revendication 6,
    **caractérisé en ce que** ladite unité de traitement de données est agencée pour charger les poids entraînés de noyaux de filtrage dans ledit modèle prédictif (12) à l'aide d'un cadre logiciel.

8.  Procédé d'évaluation de données de mesure générées à l'aide d'un dispositif optique sur la base d'une mesure de transmission effectuée sur un échantillon de sang non hémolysé (5), les données de mesure étant évaluées au moyen d'un modèle prédictif (12) réalisé sous la forme d'un réseau neuronal convolutif (CNN), lequel a été entraîné à l'aide de données d'apprentissage qui contiennent au moins en partie des données augmentées.

9.  Procédé selon la revendication 8 pour la détermination de paramètres sanguins dans des échantillons de sang non hémolysés (5), comprenant les étapes suivantes :

    - émettre un rayonnement à l'aide d'une source lumineuse (1) dans la gamme de longueurs d'onde comprise entre 300 nm et 1 000 nm en direction d'une zone de mesure,
    - agencer une cuvette de mesure (4), optiquement transparente au moins partiellement dans la gamme de longueurs d'onde de 300 nm à 1 000 nm et contenant un échantillon de sang, dans une zone de mesure à travers laquelle le rayonnement est guidé au moins temporairement pendant la mesure,
    - recevoir la lumière diffusée vers l'avant par ledit échantillon de sang (5) traversé par le rayonnement à l'aide d'un intégrateur (6)
    - acheminer le rayonnement reçu par ledit intégrateur (6) vers un spectromètre, grâce auquel au moins un signal de mesure est généré sur la base d'au moins une propriété du rayonnement, et le signal de mesure est transmis, au moins temporairement, via une interface, à une unité de traitement de données équipée d'un microcontrôleur (9),
    ladite unité de traitement de données et/ou ledit microcontrôleur (9) générant, sur la base dudit signal de mesure, au moins une donnée de mesure ou des données de mesure qui sont évaluées à l'aide d'un modèle prédictif (12), qui comprend au moins un réseau neuronal convolutif (CNN) qui été entraîné à l'aide de données d'apprentissage qui contiennent au moins en partie des données augmentées, et un résultat de l'évaluation de la donnée de mesure ou des données de mesure étant transmis via une interface à une sortie (10).

10. Procédé selon la revendication 9,
    **caractérisé en ce que**

    - un spectre de référence $I_R$ est déterminé dans le cadre d'une mesure de transmission à l'aide d'un détecteur, sans milieu absorbant et/ou diffusant dans une gamme de longueurs d'onde de 300 nm à 1 000 nm, dans un trajet optique dans la zone de mesure, sans que ledit échantillon de sang (5) ne soit disposé dans le trajet optique de la zone de mesure,
    - ledit échantillon de sang (5) est introduit, au moins partiellement, dans le trajet optique dans la zone de mesure,
    - un spectre d'échantillon $I_P$ est déterminé dans le cadre d'une mesure de transmission effectuée dans la zone de mesure à l'aide du détecteur,
    - la transmission à travers l'échantillon est mesurée pour différents temps d'intégration du détecteur afin de générer un signal de mesure sur la base du rayonnement incident, tandis que ladite source lumineuse (1) utilisée est désactivée afin d'obtenir les spectres sombres $I_{RD}$ et $I_{PD}$,
    - $I_0$ est déterminé en soustrayant $I_{RD}$ de $I_R$ et $I$ en soustrayant $I_{PD}$ de $I_P$,
    - $I_0$ et $I$ sont normalisés de manière à ce que les deux possèdent une échelle de temps identique,
    - $I$ est divisé par $I_0$ afin de déterminer un vecteur d'entrée $X$ pour au moins un modèle prédictif.
    - une moyenne et une variance de $X$ sont ajustées à l'aide de coefficients prédéfinis,
    - X est appliqué à cet au moins un modèle prédictif (12) enregistré, qui repose sur au moins un réseau neuronal convolutif (CNN) qui a été entraîné à l'aide de données d'apprentissage qui contiennent au moins en partie des données augmentées, et **en ce que**
    - une information, qui concerne au moins un paramètre sanguin dudit échantillon de sang (5), est fournie sur la base d'au moins une valeur de résultat obtenue en utilisant ledit modèle prédictif (12) entraîné.

11. Procédé selon la revendication 9 ou 10,

**caractérisé en ce qu'**au moins une couche de pooling est utilisée dans ledit réseau neuronal convolutif (CNN).

12. Procédé selon l'une des revendications 9 à 11,
**caractérisé en ce que**, pendant la mesure de transmission visant à déterminer le spectre de référence, de l'eau distillée, de l'air et/ou une solution de rinçage optiquement transparente dans la gamme de longueurs d'onde de 300 nm à 1 000 nm, en particulier dans une gamme de longueurs d'onde de 450 nm à 700 nm, est disposée dans le trajet optique.

**Fig. 1**

**Fig. 2**

Fig. 3

Fig. 4

Fig. 5

Fig. 6

Fig. 7

**Fig. 8**

**Fig. 9**

**Fig. 10**

**Fig. 11**

**Fig. 12**

**Fig. 13**

△ sample (at -10 %)    × sample (no drift)    ○ sample (at +10 %)    — optimum

**Fig. 14**

△ sample (at -2 nm)    × sample (no shift)    ○ sample (at +2 nm)    — optimum

**Fig. 15**

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6262798 B1
- US 10338058 B2
- US 10088360 B2
- US 10088468 B2
- US 10151630 B2
- US 20170227397 A1
- US 20190017993 A1
- US 20190033287 A1
- DE 102020104266

**In der Beschreibung aufgeführte Nicht-Patentliteratur**

- **REDMER, B. et al.** Determination of hemoglobin derivatives in unaltered whole blood samples using Support Vector regression in the spectral range from 450 to 700nm. *Proceedings of SPIE*, 14 February 2020, vol. 11247
- **DAMON T. DEPAOLI** ; **PRUDENCIO TOSSOU** ; **MARTIN PARENT** ; **DOMINIC SAUVAGEAU** ; **DANIEL C. CÔTÉ**. Convolutional Neural Networks for Spectroscopic Analysis in Retinal Oximetry. *Scientific Reports*, 2019, vol. 9, 11387
- Measuring Oxygen Saturation with Smartphone Cameras using Convolutional Neural Networks. **DING X et al.** IEEE Journal of Biomedical an Health Informatics. IEEE, November 2019, vol. 23, 2603-2610
- Deep Convolutional Neural Networks for Raman Spectrum Recognition: A Unified Solution. **LIU J et al.** ARXIV.ORG. Cornel University Library, 18 August 2017
- **M. CHATZIDAKIS** ; **G.A. BOTTON**. Towards calibration-invariant spectroscopy using deep learning. *Scientific Reports*, 2019, vol. 9, 2126